(19) Europäisches Patentamt
European Patent Office
Office européen des brevets

(11) **EP 4 657 310 A1**

(12) **EUROPEAN PATENT APPLICATION**

(43) Date of publication:
**03.12.2025   Bulletin 2025/49**

(21) Application number: **24179158.1**

(22) Date of filing: **31.05.2024**

(51) International Patent Classification (IPC):
**G06K 19/077** (2006.01)    **H01Q 1/22** (2006.01)
**H01Q 7/00** (2006.01)    **H04B 5/26** (2024.01)

(52) Cooperative Patent Classification (CPC):
**G06K 19/07781; G06K 19/07749; G06K 19/07779;
H01Q 1/2225; H01Q 7/00; H04B 5/26**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **AdvanIDe Holdings Pte. Ltd.
Singapore 038987 (SG)**

(72) Inventors:
• **HENN, Ralf**
  038987 Singapore (SG)
• **LO, Joe**
  038987 Singapore (SG)
• **ROESSNER, Holger**
  038987 Singapore (SG)

(74) Representative: **Schweiger, Martin
Patentanwalt
Martin Schweiger
Erhardtstraße 12
80469 München (DE)**

(54) **SMART CARD FOR COMMUNICATION WITH AN EXTERNAL READER**

(57)     The application relates to a smart card comprising a first, second and third coil. The second coil is part of an LC network and is preferably positioned within the third coil. The second coil improves the tuning of the third coil, which acts as an antenna coil, to match the third coil to an external reader. This arrangement allows improved interaction between the smart card and an external reader.

Fig. 1

**Description**

The present application generally relates to a smart card, and more particularly to a smart card comprising a first, a second and a third coil, wherein the second coil is arranged within an interior space of the third coil and configured as a passive, non-radiating component of an LC network for matching the third coil with an external reader antenna.

Generally, a smart card is a portable device equipped with embedded integrated circuits that can process and store data securely. These cards utilize contact or contactless methods to communicate with readers, performing functions such as authentication, data storage, and application processing. Commonly used in financial transactions, identity verification, access control, and public transport systems, smart cards provide enhanced security over traditional magnetic stripe cards. Synonyms for a smart card may include terms such as chip card, integrated circuit card (ICC), microchip card, and electronic card, among others. This list is merely a representative selection of the various alternative names used.

To enable data exchange between an external reader and a smart card, the external reader generates a high frequency magnetic field. This magnetic field induces a current in an antenna coil. The antenna coil is connected to a microchip, possibly by inductive coupling. This coupling provides the necessary power to operate the microchip and facilitates the transmission of data.

US 20130075477 A1 discloses a data carrier such as a smart card comprising an antenna module and a booster antenna. The booster antenna has an outer winding and an inner winding, each of which has an inner end and an outer end. A coupler coil is provided, connecting the outer end of the outer winding and the inner end of the inner winding. The inner end of the outer winding and the outer end of the inner winding are left unconnected. The coupler coil may have a clockwise or counterclockwise sense which is the same as or opposite to the sense of the outer and inner windings. Various configurations of booster antennas are disclosed.

The object of the application is to provide a smart card which improves the performance and functionality in communication with external readers.

The object of the application is solved by the features of the independent claims. Advantageous embodiments of the application are described in the dependent claims.

The application provides solutions for enhancing the matching between the smart card's antenna system and the external reader antenna, thus enabling efficient communication.

In this context, the disclosed smart card comprises in particular a unique coil configuration which allows and optimized inductive coupling with external readers. This configuration provides an antenna system in the smart card with three coils, wherein a second coil is part of an LC network, which is arranged in an interior space of a third coil and improves the matching of the third coil, which acts as an antenna coil, to the resonant frequency of the external reader. In addition, the third coil can be connected to a first coil which can be coupled to a microchip. Through this design, the smart card achieves a higher sensitivity and more reliable data exchange, making it ideal for various applications requiring secure and rapid communication.

The structural design of the smart card according to the application not only enhances communication capabilities, but also ensures that the card is robust, maintaining high structural integrity. The arrangement of the coils and the use of durable materials help to ensure that the smart card retains its functionality when subjected to physical stresses such as bending or pressure. In addition, this design allows for efficient use of space within the card, facilitating the integration of additional features such as security elements or personalization options, without compromising performance or size.

In a first aspect the application refers to elements of the configuration of three coils for a smart card, various advantageous effects can be seen. These elements can be combined with the other elements in the present application as described below.

The smart card may comprise a first coil, a second coil and a third coil. The first coil has turns defining a perimeter of a first surface area of the smart card and defining a first interior space within the first surface area surrounded by turns of the first coil. The second coil has turns defining a perimeter of a second surface area of the smart card and defining a second interior space within the second surface area surrounded by turns of the second coil. The third coil has turns defining a perimeter of a third surface area of the smart card and defining a third interior space within the third surface area surrounded by turns of the third coil. The second coil is arranged within the third interior space and configured as a passive, non-radiating component of an LC network for matching the third coil with an external reader antenna.

The configuration of the first, second, and third coils with distinct interior spaces and perimeters allows for the optimization of the card's inductive coupling capabilities with various external reader antennas, enhancing communication reliability. The arrangement of the second coil within the third interior space as a passive component of an LC network facilitates matching the resonance characteristics of the third coil with the external readers antenna. Moreover, this arrangement allows for a compact design of the coils, particularly of the third coil, which maintains effective bidirectional communication capabilities. Since the third coil is matched to an external reader antenna by the second coil, the matching of the third coil to the external reader is not determined solely by the geometric design of the third coil. A small third coil can therefore be used which is still matched to the external reader by the second coil. This leads to more space on the card for personalization, e.g. by laser engraving.

The first coil can be used to ensure that the signal or energy received from the third coil is transmitted to an IC module, which includes a microchip, via inductive coupling. Therefore, the first coil can be electrically connected to the third coil. When a current is induced in the third coil, it simultaneously induces a current in the first coil, which in turn generates a magnetic field. This first coil is positioned in relation to an IC module coil such that the magnetic field it generates can induce a current in the IC module coil. The IC module coil, located on the IC module, then supplies current to the microchip. Thus, the first coil also functions as a first coupler coil and the IC module coil as a second coupler coil. Insofar, the first coil may be configured to couple to an IC module coil. By configuring the first coil to couple specifically to an IC module coil, the design ensures a dedicated and efficient energy transfer pathway for powering the smart card's microchip.

The first coil is further designed so that it does not match with the external reader and, as a result, does not effectively absorb any energy from it.

The smart card may further comprise a second coil being separate from the first coil. The distinct configuration of the first and second coils can provide spatial separation that reduces electromagnetic interference between the coils, resulting in clearer signal transmission and reception.

The second coil can be particularly configured to match the third coil with an external reader antenna. In this context, the second coil functions as a passive, non-radiating component of an LC network, which is a synonym for a resonant circuit, resonance circuit or inductor capacitor circuit. In order for the second coil to act as a component of an LC network, it can be connected to a capacitive element. This connection can be either in parallel or in series with the capacitive element. The second coil does not radiate energy (being passive) nor does it absorb substantial radiation from the external reader. This is because the second coil is not effectively matched with the external reader antenna. Instead, the energy from the reader antenna is primarily absorbed by the third coil, which is specifically designed to be matched with the external reader's antenna. Furthermore, the second coil is neither configured as a dipole nor as a quasi-dipole.

The third coil can act as an antenna for the smart card and is therefore referred to as an antenna coil. In order to absorb as much energy as possible from the external reader, the third coil must match the resonant frequency. This can be achieved by the design of the coil and can also be influenced by an additional LC network. Since the third coil is tuned to the resonant frequency and the first and second coils are not close to the resonant frequency due to their design, the amount of induced current in the first and second coils is an order of magnitude lower than the current induced in the third coil. Accordingly, the sensitivity of reception depends greatly on characteristics of the third coil.

The design approach ensures that the smart card can operate effectively within transmission protocols such as AM (Amplitude Modulation) and SSB (Single Side Band), maintaining clear and reliable communication.

Amplitude Modulation (AM) is generally a modulation technique used in wireless communication to transmit information through waves. In this method, the amplitude of a carrier wave, typically a sine wave, is varied in direct proportion to the amplitude of the signal being transmitted.

Single Side Band (SSB) is generally a refinement of amplitude modulation that reduces bandwidth and power usage by eliminating one of the sidebands and the carrier frequency in an AM signal. SSB transmits only one of the sidebands (either upper or lower) which contains the actual information, making it more efficient than AM.

Using the high-frequency magnetic field, information can be transmitted. In this setup, the smart card can send information back to the reader. The external reader emits an electromagnetic field through its antenna, which the smart card captures. Through induction, a current is generated in the smart card's antenna coil, powering the microchip. This activated microchip may decode commands from the external reader. Subsequently, the smart card can encode and modulate the response into the emitted field. This allows the smart card to transmit its serial number or other requested information. The smart card itself does not produce a field but modifies the electromagnetic transmission field of the reader. By changing the impedance via integrated switching circuits, a distinct signal can be created. This alteration in the field can be detected by the external reader and utilized for digital communication. The smart card can modulate the carrier signal, which is then received by the reader for communication.

Furthermore, the second coil can be separate from the third coil, the third coil being larger in diameter than the first and second coils. The larger diameter of the third coil compared to the first and second coils can increase the effective inductive coupling area, which may enhance the range and strength of communication with external reader antennas. The separation of the second coil from the third coil allows for the third coil to be specifically optimized for interactions with reader antennas. Additionally, the increased diameter of the third coil permits the accommodation of the other two coils within its structure, thereby supporting a compact and integrated design.

In this context, "separate" particularly refers to a spatial separation, in particular enabling each coil to generate its own magnetic field independently. However, the coils can still be interconnected, possibly configured in serial or parallel arrangements. This refers in particular to the separation of the second coil from the third coil, as well as the separation of the second coil from the first coil.

However, the first coil can also be separated from the third coil.

The smart card can further comprise a third surface area being larger than the first and second surface areas. The larger third surface area provides a greater spatial region for inductive coupling, which can lead to a more robust communication link with the external reader. A larger third surface area can also accommodate additional electronic components or the first and second coil, thus offering flexibility in design and functionality. In particular, when the third surface area includes the first and second surface areas, i.e. the first and second coils, it enables a compact and integrated coil design.

The first and second surface areas may not overlap one another. The first and second surface areas can either both lie within the third surface area, or the second surface area lies within the third surface area and the first surface area outside the third surface area, or vice versa. Or neither of the two surface areas lies within the third surface area. This spatial separation can reduce the risk of interference between different functional areas of the card, thereby improving the reliability and performance of the card's electronic functions.

In the context of a smart card with multiple coils, "surface area" pertains to the area enclosed by the perimeter of the turns of each coil. These coils may be arranged in a flat, planar configuration on the smart card, such that the turns of each coil encompass an internal area. This configuration can include both the physical space occupied by each coil on the card and the inner area circumscribed by the turns of the coils.

As already mentioned above, second coil may be configured as a non-energy capturing and non-energy absorbing component that is not involved with signal transmission between the smart card and the external reader. The second coil is insofar configured so as to reduce or avoid being a load to a send coil of the external reader. Due to its design, the second coil is not tuned to the resonant frequency of the external reader's antenna, which means that it only absorbs minimal or almost no energy when exposed to the reader's high-frequency magnetic field. This effectively prevents the magnetic field generated by the second coil from interfering with the third coil, which could otherwise disrupt the received signal. It has been shown that the energy absorption of the second coil and the magnetic field generated by it is within the range of the normal noise already acting on the smart card, and in particular on the third coil.

In the context of communication systems, noise refers to any unwanted electrical or electromagnetic interference that distorts or corrupts the signal being transmitted. Noise can originate from various sources, both internal and external to the system, including thermal activity within electronic components, electromagnetic disturbances from other electronic devices, and atmospheric phenomena such as lightning and solar flares.

Furthermore, the smart card may comprise a microchip and a capacitive element, wherein the second coil and the capacitive element form the LC network, and wherein the IC module coil is connected to the microchip. As already indicated in the passages above, the integration of a resonance circuit comprising a second coil and a capacitive element enhances the efficiency of energy transfer between the smart card and an external reader, thereby improving the reliability of data transmission. Since the microchip receives its energy from the IC module coil, which is generated by the inductive coupling with the first coil, a modular structure is possible, leading to simplified assembly. This means that the microchip and the IC module coil can be assembled as a module in any smart card without having to be wired. In addition, the microchip can be better protected against interference from the third coil, as it is not directly connected to it. In the same way, the microchip does not affect the third coil. The microchip can further comprise a memory or other relevant components for data processing and transmitting.

The capacitive element and the second coil can be a structural unit, wherein the capacitive element is formed by two wire ends of the second coil. Combining the capacitive element and the second coil into a single structural unit simplifies the card's design, which can lead to a reduction in manufacturing complexity and associated costs. The capacitive element being formed by two wire ends of the second coil can provide a self-contained LC network with minimal components, which can improve the card's durability by reducing the number of potential failure points.

Furthermore, it is possible that the capacitive element and the second coil are separate elements. In this regard, the capacitive element may be connected to both wire ends of the second coil to constitute a parallel resonance circuit. A parallel resonance circuit configuration can contribute to a more stable tuning of the resonance frequency.

Preferably, the microchip can be mounted on an IC module. In this respect, the smart card may comprise an IC module with a module substrate. The IC module can comprise terminal electrodes serving as a contact-type transmission section and an IC module coil which serves as a non-contact-type transmission section. The inclusion of terminal electrodes on the module substrate allows for reliable electrical contact when the card is used in contact-type readers, ensuring consistent data transmission. The IC module coil serving as a non-contact-type transmission section provides the flexibility of contactless communication. Insofar, the arrangement allows dual interface operations with the smart card, i.e. contact and non-contact transmission. The IC module's dual functionality, with terminal electrodes for contact-type transmission and an IC module coil for non-contact-type transmission, offers versatility in communication methods, allowing the card to be used with a wider range of external communication devices. By incorporating both contact and non-contact transmission sections within the same IC module, the card can provide seamless user experiences, switching between transmission modes as required without the need for additional external components. IC is preferably the short form for the term "integrated circuit".

The terminal electrodes and the IC module coil can be formed on different surfaces of the module substrate by etching the double-sided cladded module substrate. Forming terminal electrodes and the IC module coil on different surfaces of a double-sided cladded module substrate optimizes the use of space and can reduce the overall thickness of the card. The etching process used to form the electrodes and coil can achieve high precision. By utilizing different surfaces of the module substrate, the card can achieve a separation of electrical components.

Further, the microchip can be connected to the terminal electrodes of the module substrate via through-holes that are filled with a conductive material. Connecting the microchip to the terminal electrodes via through-holes filled with conductive material ensures a robust and durable electrical connection that can withstand mechanical stress. The use of through-holes filled with conductive material for chip connection allows for a more streamlined design by eliminating the need for wire bonding or surface-mount techniques.

The microchip can be connected to the IC module coil by wire-bonding to constitute a circuit. The wire-bonding can be made of Au or Ag wires. The choice of Au or Ag wires for wire-bonding offers good corrosion resistance, ensuring the longevity and durability of the electrical connections under various environmental conditions. It is possible that the wire bonding and/or the microchip are encapsuled by glob-top or dam-and-fill material. This protects the components from physical damage and environmental contaminants, thereby enhancing the card's overall robustness. The use of encapsulation materials such as glob-top or dam-and-fill can also provide effective thermal management for the microchip and wire bonds.

The first coil, the second coil, the third coil may comprise a wire having a thickness of 0.8mm. The utilization of a wire with a specific thickness for the first, second, and third coils ensures that the card can be designed with a precise control over the electrical characteristics, such as resistance and inductance, which can improve the card's performance in terms of energy efficiency and signal clarity. The choice of wire thickness may also contribute to the mechanical robustness of the coils, potentially enhancing the durability of the card against physical stresses and strains during everyday use.

The first coil, the second coil, the third coil may be formed by winding insulation-coated conductor wires. Winding the coils with insulation-coated conductor wires can prevent short-circuits and electrical leakage between adjacent turns of the coil, thereby improving the reliability and safety of the smart card. The insulation coating can also protect the conductor wires from environmental factors such as moisture and chemicals, which can extend the lifespan of the smart card by preventing corrosion and degradation of the coils. The insulation used on the on the coated conducted wires can be for example polyurethane or polyesterimide. It is important that the coating is free of magnetic particles so that no undesirable attenuation of HF signals occurs.

Moreover, the first coil, the second coil and the third coil may have different pitches. Having coils with different pitches can allow for the optimization of each coil's inductive properties for specific functions, such as energy transfer or data communication, leading to enhanced overall performance of the smart card. In this regard, the pitch of the first coil is adjusted such that there is a good coupling between the first coil and the third coil. The pitch of the third coil is adjusted such that there is a good coupling between the first coil and the second coil and the external reader antenna. The pitch of second coil is adjusted such that there is a good coupling between the first coil and third coil. The pitch of a coil can, for example, be defined as the distance between the individual turns or loops of the coil.

In addition, a system can be provided. The system comprises a smart card according to the application and an external reader, wherein the external reader is configured to emit a high-frequency magnetic field which can induce a current in the third coil. The configuration of the external reader to emit a high-frequency magnetic field that can induce a current in the third coil allows for efficient energy transfer and communication between the reader and the smart card, even at a distance. The ability of the external reader to induce current in the third coil can enable passive operation of the smart card, eliminating the need for an internal power source and thus reducing the card's weight and thickness.

Furthermore, a method for communication between a smart card and an external reader with a transceiver coil can be provided. The method comprises the following method steps: emitting a high-frequency magnetic field from the transceiver coil, and providing the smart card according to the application in the high-frequency magnetic field so that a current is induced in the third coil. The method of communication enables a contactless interface between the smart card and the external reader, which not only enhances user convenience but also reduces wear and tear on the physical components, extending the card's lifespan. By inducing a current in the third coil through the high-frequency magnetic field, the method ensures a rapid and efficient energy transfer. The simplicity of the communication method, involving just the emission of a magnetic field and the placement of the card within it, allows for easy implementation and scalability across various smart card applications and systems.

The skilled person will recognize that the advantages, technical effects and preferred embodiments discussed in connection with the smart card, or the system apply analogously to the method for communication between a smart card and an external reader. Likewise, all the advantages, technical effects and preferred embodiments described in connection with the method are transferable to the smart card or system.

In further aspects that refer to elements of embedding of coils in an antenna substrate, various advantageous effects can be seen. These elements can be combined with the other elements in the present application as described above and below.

In this respect, the application relates to a method of wire embedding for a smart card. The method may comprise the following steps. A wire of a first coil and a third coil are applied to an antenna substrate of the smart card so as to embed the wire of the first and third coils onto the antenna substrate using a constant downward force throughout the laying and embedding of the two coils. The first coil has turns of wire defining a perimeter of a first surface area of the smart card and defining a first interior space within the first surface area surrounded by turns of wire of the first coil. The third coil has turns of wire defining a perimeter of a third surface area of the smart card and defining a third interior space within the third surface area surrounded by turns of the third coil. The application of a constant downward force throughout the laying and embedding process ensures uniform embedding depth of the wire into the antenna substrate, which leads to improved structural integrity and reliability of the smart card. Further, the constant force applied avoids the need for varying downward forces during different stages of the embedding process. Insofar, the force profile according to the application is flat. Additionally, the constant force leads to much faster method and is more reliable than working with a force profile. Accordingly, simpler embedding equipment can be used.

The downward force can refer to a force exerted downward on an object as the wires or the smart card. In physics and engineering contexts, it typically describes the pressure applied by a mechanism. Preferably, the downward force is the vertical force applied downward during the embedding process. In this context, the downward force can also refer to the constant pressure exerted to press materials into an antenna substrate uniformly. In sense of the application downward force can be synonym simply to force or downforce.

Furthermore, the method can further comprise that a wire of a second coil is applied to the antenna substrate of the smart card so as to embed the wire of the second coil onto the antenna substrate using a constant downward force throughout the laying and embedding of the second coil. The second coil has turns of wire defining a perimeter of a second surface area of the smart card and defining a second interior space within in the second surface area surrounded by turns of wire of the second coil. Embedding the second coil using the same constant downward force as the first and third coils ensures consistency in the manufacturing process, leading to a uniform product quality. It leads to the already mentioned advantages of manufacturing that apply to the method steps of applying the first and second coils with a constant downward force. As described above, the second coil can be part of an LC network and thus match the third coil to the resonant frequency of the antenna.

The method step of applying wire of the first, second, and third coils may include ultrasonic vibration along with the constant downward force for embedding the wire into the antenna substrate. The use of ultrasonic vibration in conjunction with the constant downward force can enhance the embedding process by promoting better adhesion of the wire to the substrate, reducing the likelihood of wire detachment over time. Ultrasonic vibration may also allow for the embedding of wire into harder or more resistant substrates without increasing the downward force. The combination of ultrasonic vibration and constant force lead to a faster embedding process.

The method of applying wire from the first, second, and/or third coils onto the antenna substrate of the smart card can incorporate various techniques, each designed to enhance the accuracy and quality of the embedding process. One technique is the pressure roller method, where precision-engineered rollers exert a constant force to press the wire into the antenna substrate. Another approach involves a heated roller method, which uses rollers heated to a controlled temperature that softens the substrate, facilitating smoother wire embedding.

Additionally, a vacuum-assisted embedding method can employ vacuum suction to precisely position the wire on the substrate, ensuring accurate placement. A pneumatic press method can also be used, applying uniform force over a larger area to embed the wire, which is particularly effective for consistent depth and adherence. Finally, a laser-assisted embedding method can utilize a laser to pre-soften the substrate along the planned wire path, allowing for easier and more precise embedding of the wire. Each of these techniques can be used alone or in combination to optimize the embedding process, depending on the specific requirements of the smart card production.

An antenna substrate can be a layer within a smart card that houses or accommodates the antenna coils i.e. the antenna coils are embedded or integrated into the antenna substrate. This substrate forms the base where wires from the antenna coils are embedded and is specifically designed for seamless integration into the smart card. After embedding the antenna coils, it can establish a strong, durable connection that remains intact over time. Preferably, the antenna substrate contains no metallic materials.

The antenna substrate may consist of materials such as PVC (Polyvinyl Chloride), PC (Polycarbonate), PET (Polyethylene Terephthalate), or PETG (Polyethylene Terephthalate Glycol-modified). Utilizing a substrate made from materials such as PVC, PC, PET, or PETG provides flexibility in the manufacturing process, as these materials are widely available and can be selected based on cost, mechanical properties, or other application-specific requirements. These materials can in particular provide the necessary mechanical support for the embedded wires while maintaining the electronic card's overall thin profile. These materials have also good durability and environmental resistance properties which can enhance the longevity and robustness of the antenna substrate in various operating conditions.

The antenna substrate can be formed by lamination of layers into a monoblock substrate without use of adhesives. Forming the antenna substrate by lamination of layers into a monoblock substrate without the use of adhesives eliminates potential points of failure associated with adhesive degradation over time, thereby increasing the structural integrity of the substrate. The absence of adhesives in the lamination process can reduce the overall manufacturing costs and complexity.

The antenna substrate may be provided in a sheet, wherein the sheet is divided into a plurality of sections, each of which is intended for a corresponding smart card, wherein on each section the wires are embedded. On each section wires for the first coil, the second coil, the third coil and/or the capacitive element can be embedded. Providing the antenna substrate in a sheet divided into sections for individual smart cards streamlines the manufacturing process, allowing for simultaneous production of multiple units and reducing production time. This approach can reduce material waste by optimizing the layout of the wire coils on the substrate, leading to cost savings and environmental benefits.

Furthermore, the method can comprise the step of applying wire of a capacitive element to the antenna substrate of the smart card so as to embed the wire of the capacitive element onto the antenna substrate using a constant downward force throughout the laying and embedding of the capacitive element. As previously mentioned, this capacitive element is connected to the second coil, forming an LC network. The advantages of an LC network in the context of the application have been already described above. It is also beneficial that all coils, along with the capacitive element, can be applied to the antenna substrate in a single, simultaneous processing step.

Additionally, a method for manufacturing a smart card can be provided. The method comprises the method steps described above. Then, the antenna substrate can be collated with at least one card substrate by means of lamination, using heat and pressure. The lamination of the antenna substrate with one or more card substrates using heat and pressure ensures a durable bond, enhancing the structural integrity and longevity of the smart card. The use of lamination in the manufacturing process allows for the integration of various functional layers, potentially improving the card's resistance to environmental factors such as moisture and temperature variations.

The antenna substrate can be arranged between two compensation layers and form an inlay, before being laminated with the at least one card substrate. Positioning the antenna substrate between two compensation layers before lamination helps to protect the antenna coils from mechanical stresses during card use, thereby maintaining the card's functionality over time. The compensation layers can also help to maintain the structural integrity of the inlay during the lamination process, preventing warping or misalignment that could affect the performance of the antenna coils. The antenna substrate may have a thickness of 50 microns to 250 microns, preferably of 150 microns.

The compensation layer can comprise the same material as the antenna substrate. Accordingly, the compensation layer can comprise PVC, PC, PET, or PETG. The compensation layer may have a thickness of 20 microns to 200 microns, preferably of 105 microns.

The card substrate may comprise a printed layer, a PVC layer or an overlay layer, wherein the card substrate can also comprise a combination of a printed layer, PVC layer and/or an overlay layer. The ability to combine different layers such as printed, PVC and overlay layers in the card substrate provides flexibility in tailoring the physical properties of the card, such as stiffness, transparency and surface finish, to specific application requirements.

A printed layer can refer to a layer that is directly applied to the antenna substrate or to the inlay by printing technology. A printed layer can also refer to a layer that is first printed (to a sheet or layer) and then placed and laminated on the antenna substrate or inlay. The printed layer may have a thickness of 15 microns to 190 microns, preferably of 100 microns.

The PVC layer of the card substrate may also have a thickness of 15 microns to 190 microns, preferably of 100 microns.

An overlay layer in a smart card can act as a protective coating. It can be designed as a clear, durable material applied directly over the printed layer and any intermediate layers, such as PVC, to protect them from physical wear, moisture and environmental elements. The overlay layer may have a thickness of 5 microns to 100 microns, preferably of 50 microns.

The antenna substrate and/or the inlay and the card substrate can be provided in sheets which are divided into a plurality of sections each of which is intended for a corresponding smart card, wherein the plurality of sections are cut or punched out to form plurality of smart cards. Providing the antenna substrate and/or inlay and the card substrate in sheets that are divided into multiple sections streamlines the manufacturing process, enabling mass production and reducing waste. The pre-sectioned sheets facilitate easy handling and alignment during the punching or cutting process.

Furthermore, an engagement hole for an IC module can be formed in the card substrate indented for each smart card by way of milling. The formation of an engagement hole in the card substrate by milling provides a precise and clean recess for accommodating an IC module, ensuring a snug fit and reducing the likelihood of misalignment or movement of the module within the smart card. Milling the engagement hole allows for the customization of the hole's dimensions to match various IC module sizes, enhancing the versatility of the smart card manufacturing process to accommodate different module specifications. The milled engagement hole also allows for low profile of the smart card, as the IC module can be fully integrated into the substrate.

The IC module can comprise an IC module coil, a microchip, a module substrate and electrodes. In this respect the module substrate is preferably cladded with a copper foil. The electrodes and the IC module coil are formed on different surfaces of the substrate module by etching the copper cladded module substrate. The microchip is connected to the IC module coil by wire bonding, and the substrate module comprises through holes filled with conductive material which serve as a connection between the microchip and the electrodes. Cladding the module substrate with copper foil before etching to form the electrodes and IC module coil allows for a high degree of precision in the IC module layout, which can improve the electrical performance and reliability of the IC module. Further, the etching of electrodes and an IC module coil on different surfaces can lead to a reduction in the size of the IC module. The use of wire bonding to connect the microchip to the IC module coil ensures a robust and stable electrical connection. The inclusion of through holes filled with conductive material in the substrate module creates a secure and efficient pathway for electrical signals between the microchip and the electrodes.

The term module substrate cladded with a copper foil can refer to a process in manufacturing where a module substrate is bonded with a thin layer of copper foil. This cladding technique enhances the substrate's electrical conductivity and allows for the creation of precise and complex circuit pathways.

In this context, cladding may involve applying a layer of copper foil directly onto a module substrate, which can be a non-conductive or less conductive substrate such as fiberglass, epoxy resin, or a polymer like Polyimide. The copper serves as the conductive surface upon which electronic circuits can be etched or printed.

Various etching processes can be used, such as wet chemical etching, dry etching and laser etching.

Further, the IC module may be attached to the engagement hole. Attaching the IC module to the engagement hole integrates the electronic components with the card substrate, creating a unified structure. The attachment of the IC module within the engagement hole can provide a flush surface on the smart card, which not only improves the aesthetic appeal but also minimizes the risk of snagging or catching on wallets, card readers, or other objects. This method of attachment can also facilitate easier replacement or upgrading of the IC module, as it is clearly defined and accessible within the structure of the electronic card.

In particular the module substrate may be glued into the engagement hole by a laminating method and a hot-melt adhesive filling method. The use of a laminating method to glue the module substrate into the engagement hole ensures a strong bond that can withstand the stresses of daily use, including bending and torsion, which contributes to the structural integrity of the smart card. Employing a hot-melt adhesive filling method provides a quick and secure means of fixing the module substrate in place, which can streamline the manufacturing process and reduce production times. The combination of laminating and hot-melt adhesive methods can seal the engagement hole, protecting the IC module from environmental factors such as moisture and dust.

The smart card may be personalized by way of embossing or by laser engraving. The utilization of embossing for personalization provides a tactile feature that can be easily verified by touch, enhancing the security against counterfeiting as the embossed details are difficult to replicate without specialized equipment. Laser engraving offers a high level of precision and permanence, ensuring that the personalized information remains legible and intact over the smart card's lifespan, even under harsh environmental conditions. Both embossing and laser engraving methods allow for customization without significantly compromising the structural integrity of the card.

The skilled person will recognize that the advantages, technical effects and preferred embodiments discussed in connection with the smart card, or the system apply analogously to the method of wire embedding for a smart card and to the method for manufacturing a smart card. Likewise, all the advantages, technical effects and preferred embodiments described in connection with the methods are transferable to the smart card or system.

In further aspects that refer to elements of the metal composition in the smart card, various advantageous effects can be seen. These elements can be combined with the other elements in the present application as described above and below.

In this context, a smart card may comprise a first coil having turns of wire defining a perimeter of a first surface area of the smart card and defining a first interior space within the first surface area surrounded by turns of wire of the first coil. Further, the smart card may comprise a second coil having turns of wire defining a perimeter of a second surface area of the smart card and defining a second interior space within the second surface area surrounded by turns of wire of the second coil. In addition, the smart card may comprise a third coil having turns of wire defining a perimeter of a third surface area of the smart card and defining a third interior space within the third surface area surrounded by turns of wire of the third coil. Also, the smart card may comprise a non-metallic substrate into which the first, second, and third coils are arranged, the non-metallic substrate being free from conductive or metallic foil or conductive or metallic layers such that a metal composition of the smart card is less than 40% by weight. The absence of conductive or metallic foil or layers ensures that the smart card remains lightweight and flexible, contributing to user convenience and reducing manufacturing costs associated with metal materials.

The smart card's metal composition being less than 40% by weight minimizes interference with the electromagnetic fields generated by the coils, thereby improving the reliability and range of communication. The electronic card's composition, with metal content below 40% of its weight, ensures that the card remains lightweight and flexible.

In total, no metal layer or component is used except of components such as a first, second and third coil. Accordingly, the product comprises some metal, but the weight of the metal is much less than 40% of the card weight. Although the product has some metal, it is not a so-called "metal card".

The smart card is composed of several layers, each contributing to the card's overall functionality and durability. Notably, none of these layers is made entirely of metal, a design choice that helps avoid potential issues with electronic interference. Instead of using a solid metal layer, such as a metal foil, alternative materials are employed.

Generally, a layer can refer to a distinct sheet or film of material that is part of the card's assembly. Each layer can serve a specific function and can contributes to the overall properties and performance of the smart card. Layers can vary widely in composition, including non-metallic substrates like PVC, PC, PET, or PETG, which are chosen for their physical properties such as flexibility, durability, and ability to support embedded electronic components like antenna coils. These layers are strategically assembled through processes like lamination to ensure that the smart card functions correctly, meets durability standards, and maintains necessary electronic properties for communication and data security.

A non-metallic substrate may comprise or be formed as an antenna substrate and/or a card substrate. A non-metallic substrate can also comprise or be formed as a compensation layer, a printed layer, a PVC layer, or an overlay layer. In addition, the non-metallic substrate can comprise, for example, PVC, PC, PET or PETG.

Furthermore, the first, second and third coils can be laid into the non-metallic card substrate without use of laser ablation or etching. The coils being laid into the non-metallic substrate without laser ablation or etching simplifies the manufacturing process, reducing production time and costs associated with more complex fabrication techniques. Avoiding the use of laser ablation or etching also reduces the environmental impact of the manufacturing process, as it eliminates the need for chemicals and reduces energy consumption. Some materials may be sensitive to the high temperatures and physical stresses induced by laser ablation or etching. Using a method that excludes these techniques can allow for a broader range of materials to be used effectively, potentially enhancing the functionality and durability of the smart cards.

The smart card may also comprise a microchip and a capacitive element, the second coil and the capacitive element forming the LC network, and the IC module coil being connected to the microchip. These components also advantageously do not cause the smart card to exceed a metal weight of 40% of the card weight but comprise less than 40% of the card weight.

An embodiment in which a smart card with a dual interface is provided also has a metal composition of the smart card of less than 40% by weight. This smart card can communicate wirelessly via inductive coupling while having an electronic transmission path in the form of a contact. In this context, an IC module can be provided which consists of a module substrate laminated or cladded with a copper foil. The microchip is connected to the IC module coil by wire bonding, and the substrate module has through-holes filled with conductive material that serve as a connection between the microchip and the electrodes.

In further aspects that refer to elements of the first and third coils formed from a single piece of wire, various advantageous effects can be seen. These elements can be combined with the other elements in the present application as described above and below.

In this regard, a smart card may comprise a first coil having turns of wire defining a perimeter of a first surface area of the smart card and defining a first interior space within the first surface area surrounded by turns of wire of the first coil. Additionally, the smart card may comprise a third coil having turns of wire defining a perimeter of a third surface area of the smart card and defining a third interior space within the third surface area surrounded by turns of wire of the third coil. The first and third coils are made from a single piece of wire. The single piece of wire has a winding direction that is the same for both the first and third coils. The integration of the first and third coils from a single piece of wire simplifies the manufacturing process, reducing the number of components and potentially lowering production costs. Further, the single wire piece may lead to a reduction in material. The uniform winding direction for both the first and third coils ensures consistent electromagnetic properties across the smart card, which can improve the reliability and performance of wireless communication functions.

The winding direction refers to the path and orientation that the wire takes as it is wound to form a coil. Typically, coils can be wound in a clockwise or counterclockwise direction. The direction in which a coil is wound affects the polarity of the magnetic field it generates when an electric current passes through it. Coils wound in the same direction will produce magnetic fields that align or complement each other.

The third coil can be connected to a capacitive element to enable an LC network without the use of a second coil. In this context, the capacitive element can be made from the same single wire as the first coil and the third coil.

The smart card may comprise a second coil having turns of wire defining a perimeter of a second surface area of the smart card and defining a second interior space within the second surface area surrounded by turns of wire of the second coil. The addition of a second coil increases the ability of the smart card to interact with an external reader. The smart card is preferably a component of an LC network and is configured to match the third coil with the antenna of the external reader. The advantages and details are explained above.

The smart card may comprise a plurality of layers, and wherein the first coil and the third coil are formed on a same layer of the smart card. It is also possible that the second coil is also formed on this layer. Forming all three coils on the same layer of the smart card simplifies the layer structure and manufacturing process, which can lead to reduced production costs and increased manufacturing efficiency. Placing the coils on a single layer can minimize the card's thickness, resulting in a slimmer profile that is more convenient for users to carry and handle.

The smart card may further comprise a microchip, an IC module coil and a capacitive element. The second coil and the capacitive element form a LC-network, wherein the third coil is connected to the first coil and to the second coil. In addition, the IC module coil is connected to the microchip, and the first coil is arranged with respect to the IC module coil such that a magnetic field generated by the first coil can induce a current in the IC module coil. The integration of the second coil with a capacitive element to form an LC-network enables precise tuning of the card's resonant frequency, improving communication performance with external readers. Arranging the first coil to induce a current in the IC module coil through a magnetic field enables contactless energy transfer and data communication, which enhances the card's usability in various contactless applications.

Further, a method for manufacturing a smart card is provided. The method may comprise the following steps. A first coil is formed having turns of wire defining a perimeter of a first surface area of the smart card and defining a first interior space within the first surface area surrounded by turns of wire of the first coil. A third coil is formed having turns of wire defining a perimeter of a third surface area of the smart card and defining a third interior space within the third surface area surrounded by turns of wire of the third coil. The first and third coils are made from a single piece of wire, and the single piece of wire has a winding direction that is the same for both the first and third coils. The utilization of a single piece of wire to form both the first and third coils ensures consistency in the electrical characteristics, such as resistance and inductance, across different parts of the smart card, leading to improved reliability in the card's performance. Manufacturing efficiency is enhanced as the process eliminates the need for splicing or joining separate wires, thereby reducing the complexity and potential points of failure within the smart card's coil structure. The identical winding direction for both coils simplifies the manufacturing process, potentially reducing the time and cost associated with the production of the smart card.

The skilled person will recognize that the advantages, technical effects and preferred embodiments discussed in connection with the smart card apply analogously to the method for manufacturing a smart card. Likewise, all the advantages, technical effects and preferred embodiments described in connection with the method are transferable to the smart card.

The method may further comprise forming a second coil having turns of wire defining a perimeter of a second surface area of the smart card and defining a second interior space within the second surface area surrounded by turns of wire of the second coil, wherein the second coil is also made from the same single piece of wire. Incorporating a second coil from the same single piece of wire further streamlines the manufacturing process. The use of a single wire for multiple coils reduces material waste and the need for additional inventory, contributing to more sustainable manufacturing practices and cost savings. The continuity of the wire between the coils can provide structural integrity to the smart card, enhancing its durability and lifespan.

The method may further comprise embedding the first coil, the second coil, and the third coil on the same layer within the smart card. Embedding all coils on the same layer within the smart card simplifies the lamination process and reduces the overall thickness of the card, resulting in a more streamlined and cost-effective production process. A single-layer coil structure can improve the thermal stability of the smart card by ensuring uniform heat distribution during operation and reducing the risk of delamination or warping. The integration of all coils into one layer facilitates easier inspection and quality control during manufacturing, as potential defects or inconsistencies can be more readily identified and corrected.

In further aspects that refer to elements of the second and third coils formed from a single piece of wire, various advantageous effects can be seen. These elements can be combined with the other elements in the present application as described above and below.

In this regard, a smart card may comprise a second coil having turns of wire defining a perimeter of a second surface area of the smart card and defining a second interior space within the second surface area surrounded by turns of wire of the second coil. In addition, the smart card may comprise a third coil having turns of wire defining a perimeter of a third surface area of the smart card and defining a third interior space within the third surface area surrounded by turns of wire of the third coil. The second and third coils can be made from a single piece of wire, and the single piece of wire having a winding direction that is the same for both the second and third coils. Further, the second coil is configured as a passive, non-radiating component of an LC network for matching the third coil with an external reader antenna. The integration of the second and third coils from a single piece of wire ensures manufacturing efficiency and reduces the complexity of the assembly process, potentially lowering production costs. The uniform winding direction for both the second and third coils simplifies the design and may enhance the electromagnetic compatibility of the smart card with external reader antennas. Configuring the second coil as a passive component of an LC network for impedance matching optimizes the energy transfer between the smart card and the reader, improving communication reliability and range.

Furthermore, the smart card may comprise a first coil having turns of wire defining a perimeter of a first surface area of the smart card and defining a first interior space within the first surface area surrounded by turns of wire of the first coil. The first coil can serve as an inductive coupling between the antenna coil, in particular the third coil, and an IC module coil which is connected to a microchip.

In this regard, the smart card may also comprise a microchip, an IC module coil, and a capacitive element. The second coil and the capacitive element can form a LC-network, and the third coil can be connected to the first coil and to the second coil. The IC module coil is connected to the microchip, and the first coil may be arranged with respect to the IC module coil such that a magnetic field generated by the first coil can induce a current in the IC module coil. This configuration results in the advantages already described in the other aspects. In particular, this leads to improved interaction between the smart card and an external reader.

The capacitive element can also be made from the single wire, from which the first coil, the second coil and/or the third coil are already made.

Further, a method for manufacturing a smart card is provided. The method may comprise the step of forming a second coil with turns of wire that define a perimeter of a second surface area of the smart card and a second interior space within the second surface area. The method may also comprise the step of forming a third coil with turns of wire that define a perimeter of a third surface area of the smart card and a third interior space within the third surface area. The second and third coils are made from a single piece of wire, wherein the single piece of wire maintains the same winding direction for both coils. The second coil is configured as a passive, non-radiating component of an LC network for matching the third coil with an external reader antenna. Using a single piece of wire for both the second and third coils offers advantages, such as reduced material consumption and streamlined manufacturing processes. There is no need to change or reattach the wire the wire between method steps, which not only speeds up production but also minimizes potential errors.

The skilled person will recognize that the advantages, technical effects and preferred embodiments discussed in connection with the smart card apply analogously to the method for manufacturing a smart card. Likewise, all the advantages, technical effects and preferred embodiments described in connection with the method are transferable to the smart card.

The method may further comprise forming a first coil with turns of wire that define a perimeter of a first surface area of the smart card and a first interior space within the first surface area. This first coil can be made also from the same wire as the second and the third coil. Or alternatively, it can be made by another wire.

The second coil may be formed within the third interior space defined by the third coil. This arrangement is particularly advantageous when using just a single wire, as it minimizes the distance between the second and third coils, allowing for a more seamless and efficient coil manufacturing process. Positioning the second coil within the interior space of the third coil optimizes the use of available space within the smart card, resulting in a more compact and efficient design. This strategic placement not only simplifies the manufacturing process but also enhances the overall performance of the smart card.

Forming coils from a single piece of wire means that the manufacturing process can be conducted continuously, using an uninterrupted length of wire. This approach ensures that the wire is not cut into separate segments or pieces, which facilitates a more uniform and efficient production. By using a single, continuous wire, the overall integrity and consistency of the coils are maintained, enhancing the smart card's performance and reliability.

In further aspects that refer to elements of the first, second, and third coils having the same winding direction formed from a single piece of wire, various advantageous effects can be seen. These elements can be combined with the other elements in the present application as described above and below.

A smart card may comprise a first, a second and a third coil. The first coil has turns of wire defining a perimeter of a first surface area of the smart card and defining a first interior space within the first surface area surrounded by turns of wire of the first coil. The second coil has turns of wire defining a perimeter of a second surface area of the smart card and defining a second interior space within the second surface area surrounded by turns of wire of the second coil. The third coil has turns of wire defining a perimeter of a third surface area of the smart card and defining a third interior space within the third surface area surrounded by turns of wire of the third coil. The first, second, and third coils are made from a single piece of wire, and the single piece of wire having a winding direction that is the same for all three of coils. The integration of three coils made from a single piece of wire ensures consistency in the electromagnetic properties across the coils, which can lead to improved communication reliability when interacting with readers. The uniform winding direction for all three coils not only simplifies the manufacturing process, but also allows for more precise control over the electromagnetic field distribution within the card.

The smart card may comprise a capacitive element. This capacitive element can also be formed from a single piece of wire, as the first, second and third coils. In particular, the capacitive element can be connected to the second coil and thus also constitute a functional unit, as for example a LC network.

Furthermore, a method for manufacturing a smart card is provided. The method comprises the step of forming a first coil with turns of wire that define a perimeter of a first surface area of the smart card and a first interior space within the first surface area. Additionally, the method comprises the step of forming a second coil with turns of wire that define a perimeter of a second surface area of the smart card and a second interior space within the second surface area. Moreover, the method comprises the step of forming a third coil with turns of wire that define a perimeter of a third surface area of the smart card and a third interior space within the third surface area. The method uses a single piece of wire to form the first, second, and third coils, and maintains the same winding direction for all three coils. Maintaining the same winding direction and using a single piece of wire for all three coils during manufacturing can lead to a reduction in errors and defects, thereby improving the overall quality and yield of the smart card production process.

In further aspects that refer to elements of the first, second, and third coils formed from a single piece of wire including no welds or soldering joints, various advantageous effects can be seen. These elements can be combined with the other elements in the present application as described above and below.

In this regard, a smart card may comprise a first coil, a second coil, and a third coil. The first coil may have turns of wire defining a perimeter of a first surface area of the smart card and defining a first interior space within the first surface area surrounded by turns of wire of the first coil. The second coil may have turns of wire defining a perimeter of a second surface area of the smart card and defining a second interior space within the second surface area surrounded by turns of wire of the second coil. The third coil may have turns of wire defining a perimeter of a third surface area of the smart card and defining a third interior space within the third surface area surrounded by turns of wire of the third coil. The first, second, and third coils are made from a single piece of wire, and the single piece of wire includes no welds or soldering joints for connecting portions of the single piece of wire. The utilization of a single piece of wire to form the first, second, and third coils enhances the structural integrity of the smart card, reducing the likelihood of mechanical failure due to weak points such as welds or soldering joints. The design simplifies the manufacturing process by eliminating the need for additional steps to connect separate wire segments, thereby reducing production costs and time. The absence of welds or soldering joints may improve the reliability and longevity of the smart card by preventing potential points of electrical resistance or corrosion that could compromise the card's functionality.

The smart card may further comprise a microchip, an IC module coil, and a capacitive element. The second coil and the capacitive element may form a LC-network and the third coil can be connected to the first coil and to the second coil. Additionally, the IC module coil is connected to the microchip. The first coil is arranged with respect to the IC module coil such that a magnetic field generated by the first coil can induce a current in the IC module coil. The capacitive element can also be made from the single piece of wire mentioned above.

Furthermore, a method for manufacturing a smart card is provided. In a method step a single piece of wire is provided, wherein the single piece of wire includes no welds or soldering joints. In another method step, a first coil is formed by winding the single piece of wire to define a perimeter of a first surface area of the smart card, and a first interior space is created within the first surface area surrounded by turns of wire of the first coil. In another method step, a second coil is formed by continuing to wind the single piece of wire to define a perimeter of a second surface area of the smart card, and a second interior space is created within the second surface area surrounded by turns of wire of the second coil. In another method step, a third coil is formed by further winding the single piece of wire to define a perimeter of a third surface area of the smart card, and a third interior space is created within the third surface area surrounded by turns of wire of the third coil. Utilizing a single piece of wire with no welds or soldering joints to form the coils reduces the risk of mechanical failure at connection points, leading to a more reliable smart card. The method of winding a single wire to create multiple coils allows for a continuous electrical pathway, which can improve the card's electromagnetic properties and overall functionality.

In further aspects that refer to elements of the capacitive element, various advantageous effects can be seen. These elements can be combined with the other elements in the present application as described above and below.

In this context, a smart card may comprise a first, second and third coil as well as a capacitive element. The first coil may have turns of wire defining a perimeter of a first surface area of the smart card and defining a first interior space within the first surface area surrounded by turns of wire of the first coil. The second coil may have turns of wire defining a perimeter of a second surface area of the smart card and defining a second interior space within the second surface area surrounded by turns of wire of the second coil. The third coil may have turns of wire defining a perimeter of a third surface area of the smart card and defining a third interior space within the third surface area surrounded by turns of wire of the third coil. The capacitive element may comprise the second coil and/or a pair of conductors arranged at an end of the second coil. Integrating the capacitive element directly with the second coil, as described, can lead to a compact overall design of the smart card. In addition, such an arrangement is simple to manufacture, as the capacitive element can also be manufactured simultaneously with the second coil. The capacitive element can also be generated from the same single piece wire as the first, second and/or third coils of the smart card.

Insofar, the capacitive element can be part of the second coil and form a structural unit with the second coil. It is also understood as a wire section standing out as sore thumbs.

The smart card is free from a capacitor component having electrodes associated therewith. The absence of a capacitor component with associated electrodes (conventional capacitor) can reduce the card's manufacturing complexity and cost, as it eliminates the need for additional materials and assembly processes. By omitting the capacitor, the card may become thinner and lighter, improving portability and user comfort during handling.

In further aspects that refer to elements of the first, second, and third coil are arranged on the same plane, various advantageous effects can be seen. These elements can be combined with the other elements in the present application as described above and below.

A smart card may comprise a first coil, a second coil and a third coil and an antenna substrate. The first coil may have turns of wire defining a perimeter of a first surface area of the smart card and defining a first interior space within the first surface area surrounded by turns of wire of the first coil. The second coil may have turns of wire defining a perimeter of a second surface area of the smart card and defining a second interior space within the second surface area surrounded by turns of wire of the second coil. The third coil may have turns of wire defining a perimeter of a third surface area of the smart card and defining a third interior space within the third surface area surrounded by turns of wire of the third coil. The antenna substrate may comprise a first plane in which the first, second, and third coils are arranged. The arrangement of the coils on a single plane within the smart card maximizes the use of space, contributing to a slim profile that maintains the card's compatibility with standard card slots and wallets. The proximity of the coils on one plane can enhance the card's ability to interact with external readers, potentially improving signal strength and reception. This layout also simplifies the assembly process, enabling faster production cycles and reducing manufacturing errors by consolidating all coils onto one layer.

The turns of the first, second, and third coils can be co-planar with one another. Having the turns of all three coils co-planar with one another reduces the complexity of the card's manufacturing process. The co-planar arrangement of the coils can provide a more uniform magnetic field distribution across the card, which may improve the consistency and range of communication with readers. The streamlined design minimizes interference between the coils, allowing for clearer signal transmission and reception, which can enhance the overall performance of the smart card.

The smart card may further comprise a capacitive element, wherein the capacitive element is connected to the second coil forming a LC-network, and wherein the capacitive element is arranged on the same plane as the first, second, and third coil. Placing the capacitive element on the same plane as the coils simplifies the card's internal structure, which can lead to a thinner design and more efficient use of the available space within the card. The capacitive element's proximity to the second coil can increase the energy efficiency of the card by minimizing resistive losses that occur with longer conductive paths.

The smart card may further comprise an IC module coil connected to a microchip, wherein the IC module coil is arranged on a second plane. The arrangement of the IC module coil on a second plane allows for a layered structure that can accommodate additional components or circuitry without increasing the card's footprint. The separation of the IC module coil onto a different plane can allow for specialized materials or shielding to be used around the microchip, which can further improve the card's performance and reliability.

The smart card may comprise an IC module having a module substrate with a second plane. The presence of a module substrate with a second plane provides a dedicated and stable platform for mounting the IC module, which can improve the mechanical robustness of the smart card against bending and torsional stresses. The modular design of the IC module with its own substrate allows for easier upgrades or customization of the smart card, as different IC modules can be developed and attached without altering the base design of the card.

The smart card may comprise a card substrate with an engagement hole accommodating the IC module. The inclusion of an engagement hole in the card substrate for accommodating the IC module provides a secure and stable positioning of the module within the smart card, thereby enhancing the durability and reliability of the card during use.

The second plane is preferably parallel to the first plane. The IC module coil and the first coil may at least partially overlap. The center of the IC module coil and the first coil can be superimposed. The partial overlap between the IC module coil and the first coil can lead to enhanced inductive coupling, which may improve the energy transfer efficiency and increase the operational range of the smart card. Overlapping coils can also save space on the card substrate, allowing for a more compact design or the inclusion of additional features without increasing the card's overall size. Superimposing the centers of the IC module coil and the first coil can maximize the magnetic field overlap, which can significantly improve the card's data transmission capabilities and power reception from external readers.

The first, second, and third coils may be arranged in the first plane such that all three antenna structures comprising the first, second, and third coils are formed on the first plane with only short distances where wire crosses over another wire or where wire bridges from the first, second, or third interior space to an outer diameter of the first, second, or third coil. Forming the first, second, and third coils on the same plane with minimal wire crossovers can reduce the risk of short circuits and signal interference, leading to a more robust and reliable smart card. The design minimizes the need for complex wire routing, which can simplify the manufacturing process and reduce production costs, while also potentially allowing for thinner card designs.

In further aspects that refer to elements of the modified properties of the second coil, various advantageous effects can be seen. These elements can be combined with the other elements in the present application as described above and below.

In this respect, a smart card may comprise a first, second and third coil. The first coil has turns of wire defining a perimeter of a first surface area of the smart card and defining a first interior space within the first surface area surrounded by turns of wire of the first coil. The second coil has turns of wire defining a perimeter of a second surface area of the smart card and defining a second interior space within the second surface area surrounded by turns of wire of the second coil. The third coil has turns of wire defining a perimeter of a third surface area of the smart card and defining a third interior space within the third surface area surrounded by turns of wire of the third coil. The second coil can be arranged to include additional turns of wire and/or configured to use wire of greater width so as to increase a surface area occupied by the second coil turns of wire. Alternately, the second coil may be arranged to include additional turns of wire and/or configured to use heavier materials so as to increase a weight of the smart card. The second coil can be arranged to include additional turns of wire and/or configured to use materials with visually distinguishable color so as to increase a visibility of the smart card. The option to increase the surface area or weight of the second coil provides a means to customize the card's physical characteristics for specific applications, such as enhancing durability or providing a premium tactile feel. Utilizing materials with visually distinguishable colors for the second coil can improve the card's aesthetics and make it easier to identify and differentiate from other cards, enhancing user experience and branding opportunities.

The second coil may comprise wire made of gold, steel, or silver. The use of gold, steel, or silver wire in the construction of a second coil can provide varying levels of conductivity, durability, and corrosion resistance, allowing for customization based on the intended application and environmental conditions. Furthermore, using heavier and visually distinct materials like gold or silver not only adds to the perceived value of the card but also increases its weight, which can be a desirable feature in certain markets. Additionally, integrating a metal core in the second coil prevents energy absorption and further increases the card's heft, enhancing both its functionality and aesthetic appeal.

The smart card may comprise an antenna substrate with a first plane, wherein the first, the second and the third coil are arranged on the first plane, the third coil extending over 70 % and 95% of the of the total size of the first plane. Accordingly, the smart card comprises a third coil arranged to cover a large surface area of the card so as to provide increased stability. Arranging the first, second, and third coils on a single plane with the third coil extending over a significant portion of the plane can create a more uniform magnetic field when activated, which can improve the card's communication range and reliability. This design may also allow for the use of larger coils without increasing the overall size of the card, which can enhance the card's ability to inductively couple with readers, even at greater distances or with obstructions present.

In further aspects that refer to elements of electrically connecting the ends of the second and third coils, various advantageous effects can be seen. These elements can be combined with the other elements in the present application as described above and below.

A smart card may comprise a first, second and third coil. The first coil has turns of wire defining a perimeter of a first surface area of the smart card and defining a first interior space within the first surface area surrounded by turns of wire of the first coil. The second coil has turns of wire defining a perimeter of a second surface area of the smart card and defining a second interior space within the second surface area surrounded by turns of wire of the second coil. The third coil has turns of wire defining a perimeter of a third surface area of the smart card and defining a third interior space within the third surface area surrounded by turns of wire of the third coil. An end of the third coil is electrically interconnected with an end of the second coil, and the second coil is positioned within the third interior space and encircled by windings of the third coil. The interconnection between the second and third coils can create a resonant circuit that may improve the energy transfer efficiency, potentially leading to faster data transmission rates and reduced power consumption during operation. The spatial arrangement of the coils, with the second coil positioned within the third coil's interior space, can provide a compact design that maximizes the use of the smart card's surface area while maintaining the functionality of multiple antennas.

The first coil can also be electrically connected to the third coil. This is a simple and effective way of transferring the induced current in the third coil to the first coil, which is coupled to the IC module coil.

A further embodiment combines one or more elements of the aspect relating to the configuration of three coils for a smart card described above with one or more elements of the aspect relating to the embedding of coils in an antenna substrate described above.

A further embodiment combines one or more elements of the aspect relating to the configuration of three coils for a smart card described above with one or more elements of the aspect relating to the metal composition in the smart card described above.

A further embodiment combines one or more elements of the aspect relating to the configuration of three coils for a smart card described above with one or more elements of the aspect relating to the first and third coils formed from a single piece of wire described above.

A further embodiment combines one or more elements of the aspect relating to the configuration of three coils for a smart card described above with one or more elements of the aspect relating to the second and third coils formed from a single piece of wire described above.

A further embodiment combines one or more elements of the aspect relating to the configuration of three coils for a smart card described above with one or more elements of the aspect relating to the first, second, and third coils having the same winding direction formed from a single piece of wire described above.

A further embodiment combines one or more elements of the aspect relating to the configuration of three coils for a smart card described above with one or more elements of the aspect relating to the first, second, and third coils formed from a single piece of wire including no welds or soldering joints described above.

A further embodiment combines one or more elements of the aspect relating to the configuration of three coils for a smart card described above with one or more elements of the aspect relating to the capacitive element described above.

A further embodiment combines one or more elements of the aspect relating to the configuration of three coils for a smart card described above with one or more elements of the aspect relating to the first, second, and third coil are arranged on the same plane described above.

A further embodiment combines one or more elements of the aspect relating to the configuration of three coils for a smart card described above with one or more elements of the aspect relating to the modified properties of the second coil described above.

A further embodiment combines one or more elements of the aspect relating to the configuration of three coils for a smart card described above with one or more elements of the aspect relating to the electrically connecting the ends of the second and third coils described above.

A further embodiment combines one or more elements of the aspect relating to the embedding of coils in an antenna substrate described above with one or more elements of the aspect relating to the metal composition in the smart card described above.

A further embodiment combines one or more elements of the aspect relating to the embedding of coils in an antenna substrate described above with one or more elements of the aspect relating to the first and third coils formed from a single piece of wire described above.

A further embodiment combines one or more elements of the aspect relating to the embedding of coils in an antenna substrate described above with one or more elements of the aspect relating to the second and third coils formed from a single piece of wire described above.

A further embodiment combines one or more elements of the aspect relating to the embedding of coils in an antenna substrate described above with one or more elements of the aspect relating to the first, second, and third coils having the same winding direction formed from a single piece of wire described above.

A further embodiment combines one or more elements of the aspect relating to the embedding of coils in an antenna substrate described above with one or more elements of the aspect relating to the first, second, and third coils formed from a single piece of wire including no welds or soldering joints described above.

A further embodiment combines one or more elements of the aspect relating to the embedding of coils in an antenna substrate described above with one or more elements of the aspect relating to the capacitive element described above.

A further embodiment combines one or more elements of the aspect relating to the embedding of coils in an antenna substrate described above with one or more elements of the aspect relating to the first, second, and third coil are arranged on the same plane described above.

A further embodiment combines one or more elements of the aspect relating to the embedding of coils in an antenna substrate described above with one or more elements of the aspect relating to the modified properties of the second coil described above.

A further embodiment combines one or more elements of the aspect relating to the embedding of coils in an antenna substrate described above with one or more elements of the aspect relating to the electrically connecting the ends of the second and third coils described above.

A further embodiment combines one or more elements of the aspect relating to the metal composition in the smart card described above with one or more elements of the aspect relating to the first and third coils formed from a single piece of wire described above.

A further embodiment combines one or more elements of the aspect relating to the metal composition in the smart card described above with one or more elements of the aspect relating to the second and third coils formed from a single piece of wire described above.

A further embodiment combines one or more elements of the aspect relating to the metal composition in the smart card described above with one or more elements of the aspect relating to the first, second, and third coils having the same winding direction formed from a single piece of wire described above.

A further embodiment combines one or more elements of the aspect relating to the metal composition in the smart card described above with one or more elements of the aspect relating to the first, second, and third coils formed from a single piece of wire including no welds or soldering joints described above.

A further embodiment combines one or more elements of the aspect relating to the metal composition in the smart card described above with one or more elements of the aspect relating to the capacitive element described above.

A further embodiment combines one or more elements of the aspect relating to the metal composition in the smart card described above with one or more elements of the aspect relating to the first, second, and third coil are arranged on the same plane described above.

A further embodiment combines one or more elements of the aspect relating to the metal composition in the smart card described above with one or more elements of the aspect relating to the modified properties of the second coil described above.

A further embodiment combines one or more elements of the aspect relating to the metal composition in the smart card described above with one or more elements of the aspect relating to the electrically connecting the ends of the second and third coils described above.

A further embodiment combines one or more elements of the aspect relating to the first and third coils formed from a single piece of wire described above with one or more elements of the aspect relating to the second and third coils formed from a single piece of wire described above.

A further embodiment combines one or more elements of the aspect relating to the first and third coils formed from a single piece of wire described above with one or more elements of the aspect relating to the first, second, and third coils having the same winding direction formed from a single piece of wire described above.

A further embodiment combines one or more elements of the aspect relating to the first and third coils formed from a single piece of wire described above with one or more elements of the aspect relating to the first, second, and third coils formed from a single piece of wire including no welds or soldering joints described above.

A further embodiment combines one or more elements of the aspect relating to the first and third coils formed from a single piece of wire described above with one or more elements of the aspect relating to the capacitive element described above.

A further embodiment combines one or more elements of the aspect relating to the first and third coils formed from a single piece of wire described above with one or more elements of the aspect relating to the first, second, and third coil are arranged on the same plane described above.

A further embodiment combines one or more elements of the aspect relating to the first and third coils formed from a single piece of wire described above with one or more elements of the aspect relating to the modified properties of the second coil described above.

A further embodiment combines one or more elements of the aspect relating to the first and third coils formed from a single piece of wire described above with one or more elements of the aspect relating to the electrically connecting the ends of the second and third coils described above.

A further embodiment combines one or more elements of the aspect relating to the second and third coils formed from a single piece of wire described above with one or more elements of the aspect relating to the first, second, and third coils having the same winding direction formed from a single piece of wire described above.

A further embodiment combines one or more elements of the aspect relating to the second and third coils formed from a single piece of wire described above with one or more elements of the aspect relating to the first, second, and third coils formed from a single piece of wire including no welds or soldering joints described above.

A further embodiment combines one or more elements of the aspect relating to the second and third coils formed from a single piece of wire described above with one or more elements of the aspect relating to the capacitive element described above.

A further embodiment combines one or more elements of the aspect relating to the second and third coils formed from a single piece of wire described above with one or more elements of the aspect relating to the first, second, and third coil are arranged on the same plane described above.

A further embodiment combines one or more elements of the aspect relating to the second and third coils formed from a single piece of wire described above with one or more elements of the aspect relating to the modified properties of the second coil described above.

A further embodiment combines one or more elements of the aspect relating to the second and third coils formed from a single piece of wire described above with one or more elements of the aspect relating to the electrically connecting the ends of the second and third coils described above.

A further embodiment combines one or more elements of the aspect relating to the first, second, and third coils having the same winding direction formed from a single piece of wire described above with one or more elements of the aspect relating to the first, second, and third coils formed from a single piece of wire including no welds or soldering joints described above.

A further embodiment combines one or more elements of the aspect relating to the first, second, and third coils having the same winding direction formed from a single piece of wire described above with one or more elements of the aspect relating to the capacitive element described above.

A further embodiment combines one or more elements of the aspect relating to the first, second, and third coils having the same winding direction formed from a single piece of wire described above with one or more elements of the aspect relating to the first, second, and third coil are arranged on the same plane described above.

A further embodiment combines one or more elements of the aspect relating to the first, second, and third coils having the same winding direction formed from a single piece of wire described above with one or more elements of the aspect relating to the modified properties of the second coil described above.

A further embodiment combines one or more elements of the aspect relating to the first, second, and third coils having the same winding direction formed from a single piece of wire described above with one or more elements of the aspect relating to the electrically connecting the ends of the second and third coils described above.

A further embodiment combines one or more elements of the aspect relating to the first, second, and third coils formed from a single piece of wire including no welds or soldering joints described above with one or more elements of the aspect relating to the capacitive element described above.

A further embodiment combines one or more elements of the aspect relating to the first, second, and third coils formed from a single piece of wire including no welds or soldering joints described above with one or more elements of the aspect relating to the first, second, and third coil are arranged on the same plane described above.

A further embodiment combines one or more elements of the aspect relating to the first, second, and third coils formed from a single piece of wire including no welds or soldering joints described above with one or more elements of the aspect relating to the modified properties of the second coil described above.

A further embodiment combines one or more elements of the aspect relating to the first, second, and third coils formed from a single piece of wire including no welds or soldering joints described above with one or more elements of the aspect relating to the electrically connecting the ends of the second and third coils described above.

A further embodiment combines one or more elements of the aspect relating to the capacitive element described above with one or more elements of the aspect relating to the first, second, and third coil are arranged on the same plane described above.

A further embodiment combines one or more elements of the aspect relating to the capacitive element described above with one or more elements of the aspect relating to the modified properties of the second coil described above.

A further embodiment combines one or more elements of the aspect relating to the capacitive element described above with one or more elements of the aspect relating to the electrically connecting the ends of the second and third coils described above.

A further embodiment combines one or more elements of the aspect relating to the first, second, and third coil are arranged on the same plane described above with one or more elements of the aspect relating to the modified properties of the second coil described above.

A further embodiment combines one or more elements of the aspect relating to the first, second, and third coil are arranged on the same plane described above with one or more elements of the aspect relating to the electrically connecting the ends of the second and third coils described above.

A further embodiment combines one or more elements of the aspect relating to the modified properties of the second coil described above with one or more elements of the aspect relating to the electrically connecting the ends of the second and third coils described above.

The present disclosure is illustrated by way of example and not limited in the accompanying figures in which like reference numerals indicate similar elements. Embodiments of the application will now be described with reference to the attached drawings:

Fig. 1 shows a smart card in an exploded perspective view,

Fig. 2 shows a longitudinal sectional view of a smart card, with an antenna substrate shown in top view,

Fig. 3 shows a smart card comprising a half size third coil in top view,

Fig. 4 shows a smart card comprising a 2/3 size third coil in top view,

Fig. 5 shows a smart card in an exploded perspective view,

Fig. 6 shows a cross-sectional view of a smart card,

Fig. 7 shows a cross-sectional view of the IC module,

Fig. 8 shows a cross-sectional view of a smart card comprising an inlay,

Fig. 9 shows a sheet of an inlay comprising an antenna substrate.

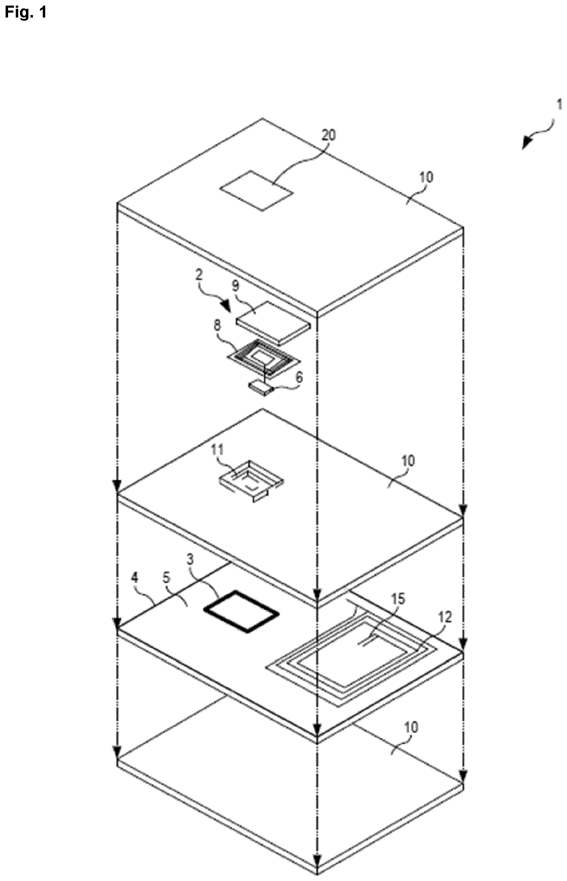

Fig. 1 shows a smart card 1 in an exploded perspective view. The smart card 1 comprises a first coil 3, a second coil 12, a third coil 4, an IC module coil 8, a microchip 6, and a capacitive element 15.

The third coil 4 is electrically connected to the second coil 12 and to the first coil 3. The second coil 12 and the capacitive element 15 form a resonance circuit and are configured to match the third coil 4 with the external reader for optimized signal reception and transmission.

In addition, the IC module coil 8 is electrically connected to the microchip 6. This IC module coil 8 is positioned in relation to the first coil 3 in such way that a magnetic field generated by the first coil 3 can induce a current in the IC module coil 8.

The smart card 1 comprises multiple layers. The third coil 4, the first coil 3, the second coil 12 and the capacitive element 15 are embedded in the same layer, in particular in an antenna substrate 5. After embedding the coils, the antenna substrate 5 is laminated with card substrates 10 to form a sandwich structure.

Further, the first coil 3 is designed with turns that define the perimeter of a first surface area of the smart card 1 and define a first interior space surrounded by turns of the first coil 3. Similarly, the second coil 12 has turns defining a perimeter of a second surface area and a second interior space within it. The third coil 4 with turns defines the perimeter of a third surface area and a third interior space.

Moreover, the third coil 4 has a larger diameter than the first coil 3 and the second coil 12. Accordingly, the third surface area is larger than the first and second surface areas. In this regard, the second coil 12 and the first coil 3 are arranged in the third interior space within the third surface area, wherein the first and second surface areas do not overlap one another.

Additionally, the capacitive element 15 is constructed as an integral part of the second coil 12, formed by extending wire ends from the second coil 12.

Further, the IC module coil 8 is situated on a different layer than the first coil 3, the third coil 4, the second coil 12, and the capacitive element 15. It is mounted on an IC module 2 which includes a module substrate 9. The microchip 6 is also mounted on this IC module 2. For assembly of the IC module 2, an engagement hole 11 and an alternative engagement hole 20 are provided in the card substrate 10 through a milling process.

For data transfer between the smart card 1 and the external reader, a high-frequency magnetic field is generated by the external reader. When the smart card 1 is situated within this high-frequency magnetic field, a current is induced in the third coil 4.

The third coil 4 is specifically tuned to the resonant frequency of the external device's antenna by connecting a resonance circuit comprising a second coil 12 with a capacitive element 15 to the third coil 4.

The second coil 12, while being a passive component, does not actively radiate or significantly absorb radiation from the external reader due to its design, which does not match it with the external device's antenna. Instead, its main function is to optimize the efficiency of the energy transfer by matching the third coil 4 with the external reader, helping to enhance the overall performance of the system without directly participating in the active communication process. This configuration ensures that the primary absorption of the emitted energy is performed by the third coil 4.

Additionally, the induced current is substantially higher in the third coil 4 compared to the IC module coil 8, which is directly connected to the microchip 6. As a result, the received signal's sensitivity of the smart card 1 is greatly influenced by the characteristics of the third coil 4.

The received signal or induced current in the third coil 4 is then transferred to the first coil 3. Due to the close coupling and efficient placement of the first and IC module coils 3, 8, the signal is effectively transmitted to the microchip 6.

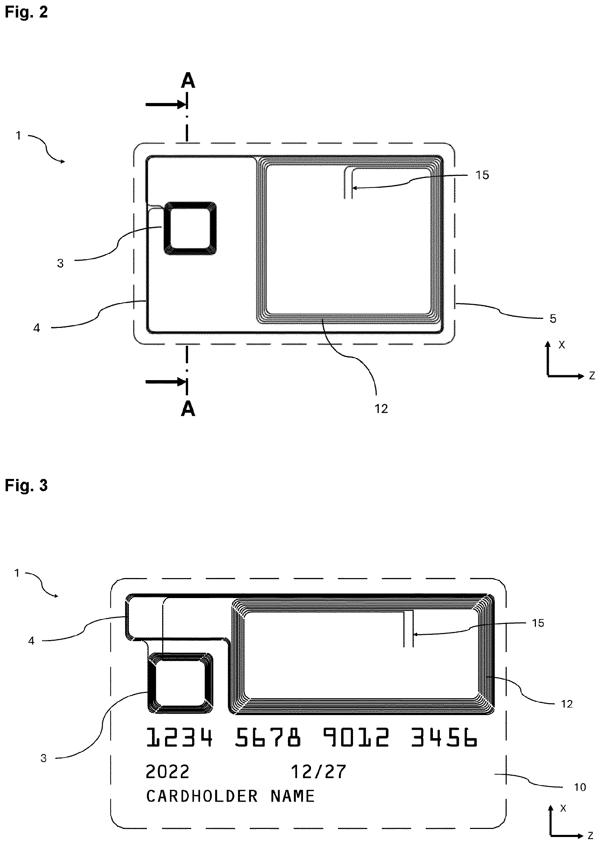

Fig. 2 shows a longitudinal sectional view of a smart card 1, with an antenna substrate 5 shown in top view. The antenna substrate 5 comprises a first coil 3, a third coil 4, a second coil 12, and a capacitive element 15. The third coil 4, which has the largest diameter, surrounds the second coil 12, the first coil 3 and the capacitive element 15. The capacitive element 15 is formed by two wire ends of the second coil 12.

The first coil 3, the third coil 4, the second coil 12, and the capacitive element 15 are embedded into the antenna substrate 5 with a constant force. Several embedding methods are conceivable. But, the embedding is preferably done without the use of any conductive foil, conductive layer, laser ablation, or etching.

The method step of applying wire of the first, second, and third coils may include ultrasonic vibration along with the constant downward force for embedding the wire into the antenna substrate.

Embedding can be carried out, for example, by laying the first coil 3, the third coil 4, the second coil 12 and the capacitive element 15 in the antenna substrate 5 by using ultrasonic vibration along with the constant downward force.

Furthermore, the third coil 4, the first coil 3 and the second coil 12, and preferably also the capacitive element 15, can be made from a single piece of wire. The single piece of wire provides the same winding direction for the third coil 4, the first coil 3 and the second coil 12. In addition, no welding or soldering is required to connect sections of the wire.

Fig. 3 shows a smart card 1 in top view. Although the top layer of the smart card 1, in particular a card substrate 10, is visible, Fig. 3 also schematically depicts a third coil 4, a first coil 3, a second coil 12, and a capacitive element 15. The third coil 4 is of half the size compared to the embodiment shown in Figs. 1 and 2.

The half-size third coil 4 may have the following dimensions: 80mm x 26mm. Furthermore, the first coil 3 and the second coil 12 have 9 turns, while the half-size antenna has 6 turns. The term "turns" refers to the number of times the wire is wound around the core of the coil.

Under these conditions, the inductance of the third coil 4 is around 4uH, with a capacitance of around 5pF, yielding a resonant frequency of 32.5MHz. To tune the third coil 4 to a resonant frequency of 13.56MHz, the second coil 12 matches by providing an additional resonance circuit, i.e. a LC network, with a capacitance of 30pF. The resulting resonant frequency is approximately 13.5MHz.

The third coil 4 has a larger diameter than the first coil 3 and the second coil 12. Accordingly, the third surface area is larger than the first and second surface areas. In this regard, the second coil 12 is arranged in the third interior space within the third surface area. In contrast, the first coil 3 is not enclosed by the third coil 4.

The third coil 4 is electrically connected to both the second coil 12 and the first coil 3. Additionally, the capacitive element 15 is constructed as an integral part of the second coil 12, formed by extending wire ends from the second coil 12. The smart card 1 can be further personalized through embossing or laser engraving.

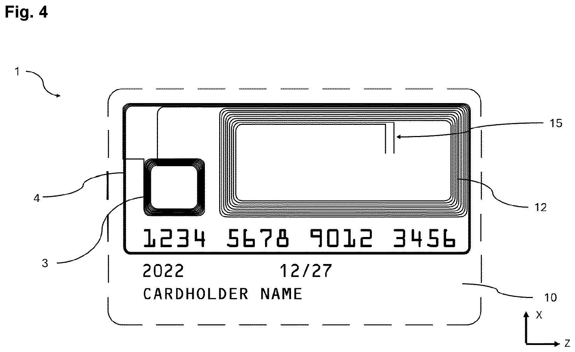

Fig. 4 shows a smart card 1 in top view. Although the top layer of the smart card 1, in particular a card substrate 10, is visible, Fig. 4 also schematically depicts a third coil 4, a first coil 3, a second coil 12, and a capacitive element 15. The third coil 4 is of $2/3$ the size compared to the embodiment shown in Figs. 1 and 2.

The $2/3$ third coil 4 may have the following dimensions: 80mm x 35mm. While the first coil 3 comprises 9 turns, the second coil comprises 11 turns. On the other hand, the ⅔ antenna has 3 turns.

To enhance the coupling between the third coil 4 and the external device's antenna, the 2/3 size third coil 4 can used instead of the half-size third coil 4. The number of turns in the third coil 4 can be reduced in order, for example, to run the third coil 4 wire between embossing data on a banking card. Consequently, the capacitance of the third coil 4 is decreased. To achieve a resonant frequency of 13.56 MHz, the number of turns in the inner coil is increased.

The third coil 4 has a larger diameter than the first coil 3 and the second coil 12. Accordingly, the third surface area is larger than the first and second surface areas. In this regard, the second coil 12 and the first coil 3 are arranged in the third interior space within the third surface area, wherein the first and second surface areas do not overlap one another.

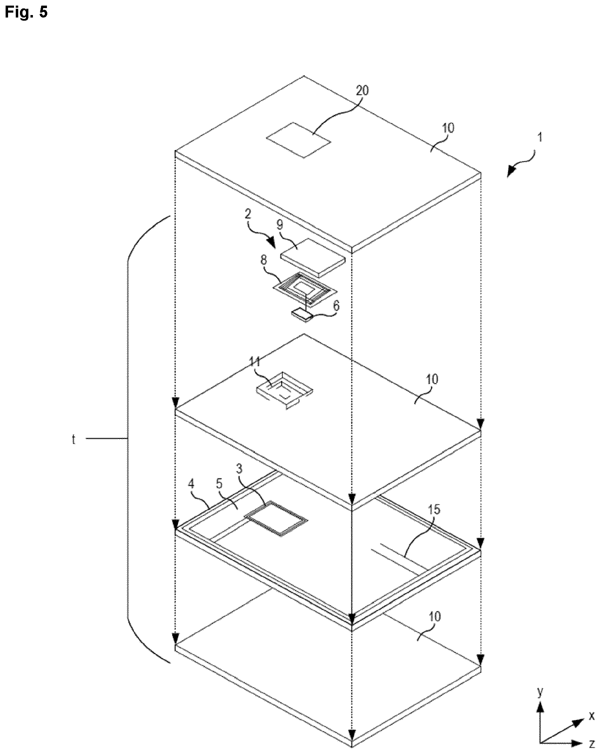

Fig. 5 shows a smart card 1 in an exploded perspective view. The smart card 1 comprises a third coil 4 which serves both to receive energy and to exchange information with the external device. The third coil 4 can be electromagnetically coupled with the external reader.

The first coil 3 has turns of wire defining a perimeter of a first surface area of the smart card 1 and defining a first interior space within the first surface area surrounded by turns of wire of the first coil 3. The third coil 4 has turns of wire defining a perimeter of a third surface area of the smart card and defining a third interior space within the third surface area surrounded by turns of wire of the third coil 4.

A capacitive element 15 is connected to the ends of the third coil 4 forming a parallel resonance circuit that enhances the smart card's 1 efficiency in data transfer. Additionally, a first coil 3 is connected to the third coil 4.

A microchip 6, incorporated within an IC module 2, is connected to an IC module coil 8. The proximity of the first coil 3 to the IC module coil 8 allows for signal transmission through inductive coupling, which occurs without a direct electrical connection. The IC module 2 also includes a module substrate 9 and is mounted in the engagement holes 11, 20 created in a card substrate 10.

The first coil 3, the third coil 4 and the capacitive element 15 can be applied to an antenna substrate 5 using a wire embedding process which use ultrasonic vibration and which uses a constant downward force throughout the wire embedding process rather than applying different downward forces during the embedding process.

Further, the first coil 3, the third coil 4 and the capacitive element 15 can be laid into a non-metallic antenna substrate 5 without use of any conductive foil, conductive layer, laser ablation, or etching. The smart card 1 is, additionally, free from metal layers. Also, the metal composition of the smart card 1 is less than 40% of the smart card 1 weight.

Moreover, the first coil 3, the third coil 4 are made from a single piece of wire, the single piece of wire having the same winding direction for both the first coil 3 and the third coil 4. Alternatively, also the capacitive element 15 can be made from this single piece of wire.

The process of coupling data transfer involves a high-frequency magnetic field from an external reader inducing currents in the resonance circuit, which comprise the third coil 4 and capacitive element 15. These currents are then transferred to the first coil 3 and IC module coils 8, with the latter transmitting power to the microchip 6.

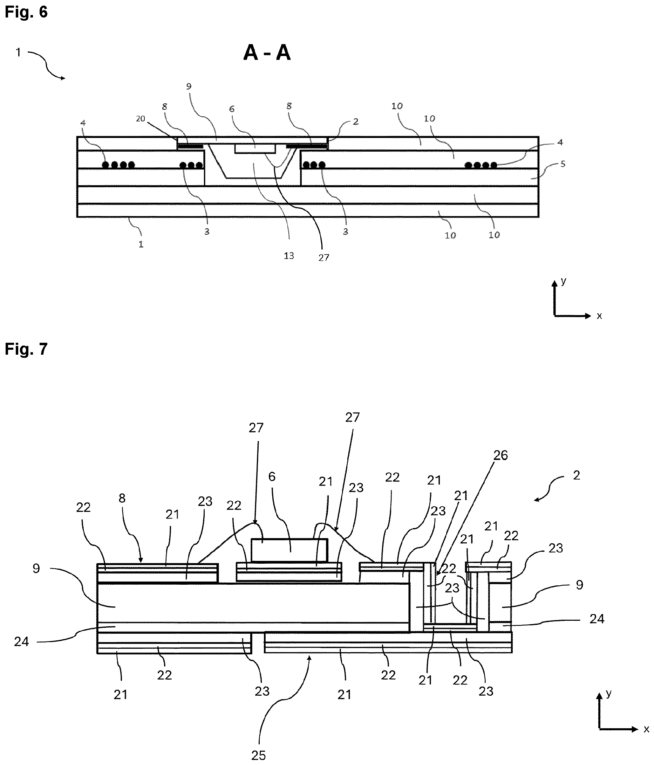

Fig. 6 shows a cross-sectional view of a smart card 1. The smart card 1 is composed of multiple layers, each of which is formed as an antenna substrate 5 or a card substrate 10. None of these layers consists entirely of metal, and the overall metal composition of the smart card 1 does not exceed 40% of the smart card's 1 weight.

A third coil 4 and a first coil 3 are embedded in the antenna substrate 5. Also, a second coil 12 can be embedded in the antenna substrate 5. The antenna substrate 5 is disposed between layers of a card substrate 10, wherein two layers of the card substrate 10 are each disposed above and below the antenna substrate 5. The respective layers are bonded together.

Preferably, the antenna substrate 5 consists of materials such as PVC, polyimide, polycarbonate, or PET, while the card substrate 10 comprises PVC or a printed layer.

Moreover, an engagement hole 20 is provided in the card substrate 10 which can extend through all layers, including the antenna substrate 5. An IC module 2 is mounted within this engagement hole 20. The IC module 2 comprises a module substrate 9, an attached microchip 6 and an IC module coil 8. The microchip 6 is connected to the IC module coil 8 by wire bonding 27. Both the wire bonding 27 and the microchip 6 are encapsulated by dam-and-fill encapsulation material 13. In addition, the IC module coil 8 is aligned so that its center lies over the center of the first coil 3. The individual windings of the first coil 3 and the IC module coil 8 are also positioned on top of each other.

Fig. 7 illustrates a cross-sectional view of the IC module 2, which includes a module substrate 9. The module substrate 9 is clad with copper foil 23 on both sides and partially connected by an adhesive layer 24. The IC module coil 8 is formed directly on a first side of the module substrate 9 by etching the copper-clad substrate 9. Additionally, gold plating 21 and nickel plating 22 can be applied to the copper foil 23 through a deposition process. A microchip 6 is wire-bonded 27 to the first coil 3.

Further, the IC module comprises terminal electrodes 25 which act as a contact-type transmission section. These electrodes 25 are formed on a second side of the module substrate 9 by the etching the copper foil 23. The electrodes 25 and the microchip 6 are connected through via structures 26 which a through holes that are filled with a conductive material. Contrary, the IC module coil 8 constitutes a non-contact-type transmission section.

The arrangement allows dual interface operations with the smart card 1, i.e. contact and non-contact transmission.

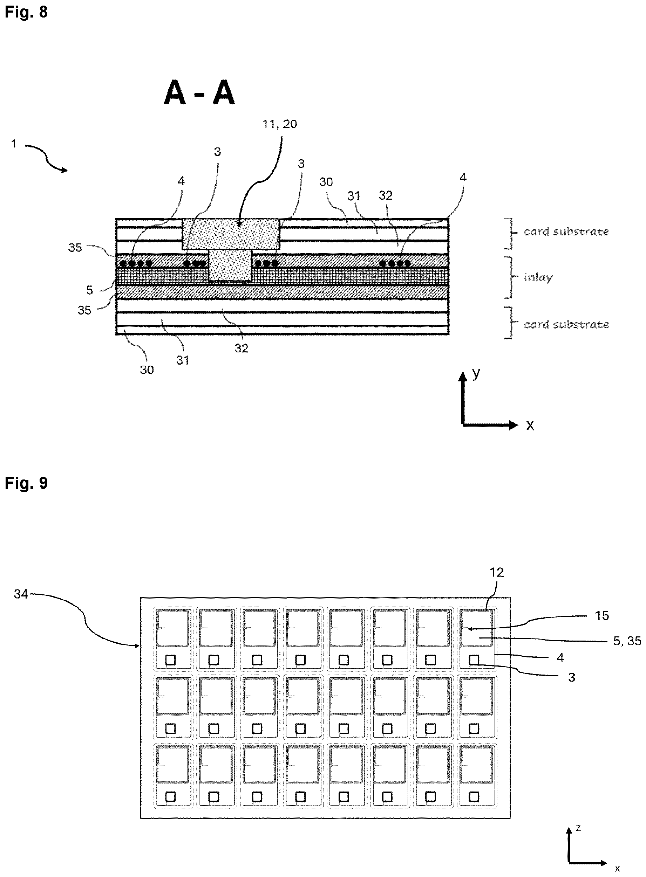

Fig. 8 shows a cross-sectional view of a smart card 1. The smart card 1 comprises multiple layers, which include both an inlay and card substrates 10. The inlay is arranged between two card substrates 10 and is permanently connected to them by lamination.

The inlay comprises an antenna substrate 5 on which at least one third coil 4 and a first coil 3 are embedded. Als, a second coil 12 can be embedded in the antenna substrate 5. In addition, the inlay comprises two compensation layers 35 located respectively above and below the antenna substrate 5. The card substrates 10 consist of a printed layer 32, a PVC layer 31 or an overlay layer 30, all of which are permanently bonded or laminated to the inlay.

The individual layers of the smart card 1 have specific thicknesses. For example, the antenna substrate 5 may have a thickness of 150 microns, the compensation layers 35 each may have a thickness of 105 microns, the printed layer 32 can have a thickness of 100 microns, the PVC layer 31 may also have a thickness of 100 microns, and the overlay layer 30 may have a thickness of 50 microns.

Furthermore, an engagement hole 11, 20, is milled into the card substrate 10 and/or the inlay to accommodate an IC module 2.

The smart card 1 may be supplied solely as an inlay or as an inlay plus a printed layer 32 and a PVC layer 31, allowing a customer the option to provide their own overlay layers 30.

Fig. 9 shows a sheet 34 of an inlay with an antenna substrate 5. The sheet 34 is segmented into different sections, each of which is associated with a particular smart card 1. Within each section, wires are embedded to form a first coil 3, a third coil 4, a second coil 12 and a capacitive element 15.

The antenna substrate 5 is placed between two compensation layers 35, thus forming an inlay.

The next stage is to assemble the printing layers 32 and the PVC layers 31 and the overlay 30, and to laminate these and the inlay sheet together using heat, pressure and waiting time to form a so-called mono-block.

After that, in individual cards are extracted from the sheet monoblock. A cavity for the IC module 2 is then milled into each card. After milling, the IC module 2 is embedded into each single card, thereby forming the smart card 1.

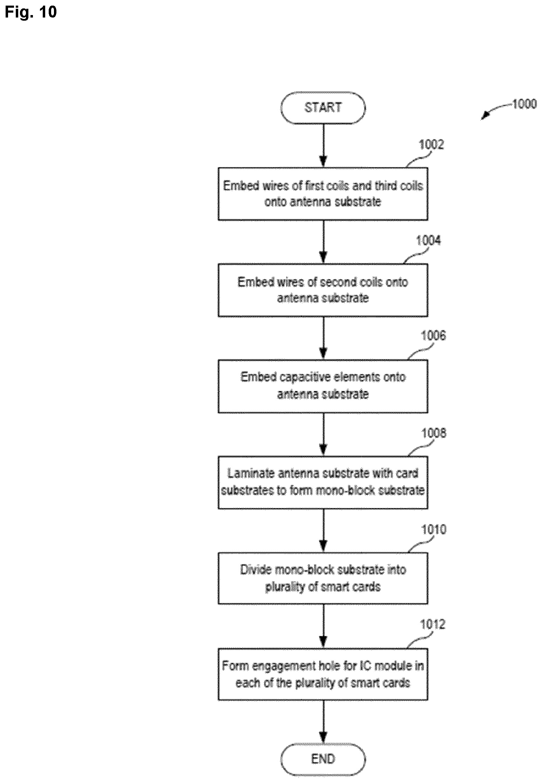

Fig. 10 shows a flowchart illustrating a method 1000 for forming a smart card 1. The smart card 1 as described herein may be the smart card 1 described with respect to FIGS. 1-9. In some examples, the smart card 1 may have coils with a first size configuration, as shown in FIG. 2, a second size configuration, as shown in FIG. 3, or a third size configuration, as shown in FIG. 4.

At 1002, method 1000 includes embedding wires of first coils 3 and third coils 4 onto an antenna substrate 5. As described with respect to FIG. 9, the antenna substrate 5 may be formed as part of a sheet 34 that comprises multiple sections, each section corresponding to a smart card 1. Each first coil 3 may be a coupler coil and may comprise turns of wire that define a perimeter of a first surface area of the smart card 1, thereby defining a first interior space within the first surface area surrounded by the wire of the first coil 3. Similarly each third coil 4 may be an antenna coil and may comprise turns of wire that define a perimeter of a third surface area, thereby defining a third interior space within the third surface area surrounded by the wire of the third coil 4.

At 1004, method 1000 includes embedding wires of second coils 12 onto the antenna substrate 5. The second coils 12 may be separate from both the first 3 and third coils 4 in each respective card 1. The second coil 12 may have turns of wire defining a perimeter of a second surface area, thereby defining a second interior space within the second surface area surrounded by the wire of the second coil 12. The first 3 and/or second coils 12 may be embedded onto the antenna substrate 5 within the third interior space of the respective third coil 4, in some examples. For example, in the first and third size configurations of the second 12 and third coils 4, the first 3 and second coils 12 may be positioned within the interior space of the third coil 4. In other examples, such as in the second size configuration of the second 12 and third coils 4, the second coil 12 may be positioned within the interior space of the third coil 4 while the first coil 3 may be positioned outside the interior space of the third coil 4. Thus, the third surface area may be larger than the first and second surface areas and in some examples, the third surface area may include the first and/or second surface areas.

The first 3, second 12, and third coils 4 of each of the smart cards 1 may be embedded in the antenna substrate 5 via constant downward force and/or ultrasonic vibration. Thus, the coils may be embedded into the non-metallic substrate (e.g., the antenna substrate 5) without variable downward force or use of conductive foil, a conductive layer, laser ablation, or etching. Avoiding the use of laser ablation or etching also reduces the environmental impact of the manufacturing process, as it eliminates the need for chemicals and reduces energy consumption. Some materials may be sensitive to the high temperatures and physical stresses induced by laser ablation or etching. Using a method that excludes these techniques can allow for a broader range of materials to be used effectively, potentially enhancing the functionality and durability of the smart cards.

At 1006, method 1000 comprises embedding capacitive elements 15 onto the antenna substrate 5 for each of the smart cards 1. In some examples, the capacitive element 15 may be configured as an extension of the second coil 12. The second coil 12 and the capacitive element 15 together may form an LC network. The capacitive elements 15 may similarly be embedded via ultrasonic vibration and/or constant downward force.

At 1008, method 1000 comprises laminating the antenna substrate 5 with card substrates 10 to form a mono-block substrate. As is described above, multiple card substrates 10 may be disposed about the antenna substrate 5 as layers of the smart card 1. The antenna substrate 5, when configured as a sheet 34 with a plurality of sections each intended for a corresponding smart card 1 of a plurality of smart cards 1, may be laminated with the card substrate 10 layers. Lamination of the layers may thus form the mono-block substrate. The mono-block substrate may also be a sheet with a plurality of sections corresponding to the plurality of smart cards 1.

At 1010, method 1000 includes dividing the mono-block substrate into the plurality of smart cards 1. As described with respect to FIG. 9, the plurality of sections of the sheet may be divided via cutting (e.g., via a laser) in order to separate the plurality of sections from one another.

At 1012, method 1000 includes forming an engagement hole 11, 20 for an IC module 2 in each of the plurality of smart cards 1. As is described above, the IC module 2 may comprise an IC module coil 8, a microchip 6, and a module substrate 9 with electrodes 25. The module substrate 9 may be cladded with copper foil 23 and the electrodes 25 and the IC module coil 8 may be formed on different surfaces of the substrate module 9 by etching the copper cladded module substrate. The microchip 6 may be connected to the IC module coil 8 by wire bonding. The IC module 2 may be attached to the engagement hole 11, 20 that is formed through the smart card 1.

The above embodiments in the application can also be described using the following Itemized lists.

The first itemized list refers to the aspect relating to the embedding of coils in an antenna substrate. The items of the first itemized list can be combined with one or more items of all other itemized lists in this document as well as with one or more features of the claims.

First itemized list:

1. A method of wire embedding for a smart card, the method comprising:

- applying wire of a first coil and a third coil to an antenna substrate of the smart card so as to embed the wire of the first and third coils onto the antenna substrate using a constant downward force throughout the laying and embedding of the two coils,

- the first coil having turns of wire defining a perimeter of a first surface area of the smart card and defining a first interior space within the first surface area surrounded by turns of wire of the first coil,

- the third coil having turns of wire defining a perimeter of a third surface area of the smart card and defining a third interior space within the third surface area surrounded by turns of the third coil.

2. The method according to item 1, the method further comprising:

- applying wire of a second coil to the antenna substrate of the smart card so as to embed the wire of the second coil onto the antenna substrate using a constant downward force throughout the laying and embedding of the second coil,

- the second coil having turns of wire defining a perimeter of a second surface area of the smart card and defining a second interior space within in the second surface area surrounded by turns of wire of the second coil.

3. The method according to item 2, wherein applying wire of the first, second, and third coils includes ultrasonic vibration along with the constant downward force for embedding the wire into the antenna substrate.

4. The method according to item 2 or item 3, wherein the second coil is arranged within the third interior space.

5. The method according to any of the preceding items 2 - 4, wherein the second coil is separate from the first coil.

6. The method according to any of the preceding items 2 - 5, wherein the second coil is separate from the third coil, the third coil being larger in diameter than the first and second coils.

7. The method according to any of the preceding items 2 - 6, wherein the third surface area is larger than the first and second surface areas.

8. The method according to any of the preceding items 2 - 7, wherein the third surface area includes the first and second surface areas.

9. The method according to any of the preceding items 2 - 8, wherein the first and second surface areas do not overlap one another.

10. The method according to any of the preceding items, wherein the antenna substrate comprises a PVC or PC or PET or PETG substrate.

11. The method according to any of the preceding items, wherein the antenna substrate is formed by lamination of layers into a monoblock substrate without use of adhesives.

12. The method according to any of the preceding items, wherein the antenna substrate is provided in a sheet, wherein the sheet is divided into a plurality of sections, each of which is intended for a corresponding smart card.

13. The method according to any of the preceding items, the method further comprising:

- applying wire of a capacitive element to the antenna substrate of the smart card so as to embed the wire of the capacitive element onto the antenna substrate using a constant downward force throughout the laying and embedding of the capacitive element.

14. A method for manufacturing a smart card comprising:

- a method according to any of the preceding items, and
- collating the antenna substrate with at least one card substrate by means of lamination, using heat and pressure.

15. The method according to item 14, wherein the antenna substrate is arranged between two compensation layers and form an inlay, before being laminated with the at least one card substrate.

16. The method according to item 14 or item 15, wherein the card substrate comprises a printed layer, a PVC layer or an overlay layer, wherein the card substrate can also comprise a combination of a printed layer, PVC layer and/or an overlay layer.

17. The method according to items 14 - 16, wherein the antenna substrate and/or the inlay and the card substrate are provided in sheets which are divided into a plurality of sections each of which is intended for a corresponding smart card, wherein the plurality of sections are cut or punched out to form plurality of smart cards.

18. The method according to items 14 - 17, wherein an engagement hole for an IC module is formed in the card substrate indented for each smart card by way of milling.

19. The method according to item 18, wherein the IC module comprises an IC module coil, a microchip, a module substrate and electrodes,

- wherein the module substrate is cladded with a copper foil, and

- wherein the electrodes and the IC module coil are formed on different surfaces of the substrate module by etching the copper cladded module substrate, and

- wherein the microchip is connected to the IC module coil by wire bonding, and the substrate module comprises through holes filled with conductive material which serve as a connection between the microchip and the electrodes.

20. The method according to item 18 or 19, wherein the IC module is attached to the engagement hole.

21. The method according to item 20, wherein the IC module is glued into the engagement hole by a laminating method and a hot-melt adhesive filling method.

22 The method according to items 19 - 21, wherein the wire bonding and/or the microchip are encapsuled by glob-top or dam-and-fill material.

23. The method according to any of the preceding items 14 - 22, wherein the smart card is personalized by way of embossing or by laser engraving.

The second itemized list refers to the aspect relating to the metal composition in the smart card. The items of the second itemized list can be combined with one or more items of all other itemized lists in this document as well as with one or more features of the claims.

Second itemized list:

1. A smart card comprising:

- a first coil having turns of wire defining a perimeter of a first surface area of the smart card and defining a first interior space within the first surface area surrounded by turns of wire of the first coil; and

- a second coil having turns of wire defining a perimeter of a second surface area of the smart card and defining a second interior space within the second surface area surrounded by turns of wire of the second coil; and

- a third coil having turns of wire defining a perimeter of a third surface area of the smart card and defining a third interior space within the third surface area surrounded by turns of wire of the third coil; and

- a non-metallic substrate of the smart card into which the first, second, and third coils are arranged, the non-metallic substrate being free from conductive or metallic foil or conductive or metallic layers such that a metal composition of the smart card is less than 40% by weight.

2. The smart card according to item 1, wherein the first, second, and third coils are laid into the non-metallic card substrate without use of laser ablation or etching.

3. The smart card according to any of the preceding items, wherein the second coil is arranged within the third interior space.

4. The smart card according to any of the preceding items, wherein the second coil is separate from the first coil.

5. The smart card according to any of the preceding items, wherein the second coil is separate from the third coil, the third coil being larger in diameter than the first and second coils.

6. The smart card according to any of the preceding items, wherein the third surface area is larger than the first and second surface areas.

7. The smart card according to any of the preceding items, wherein the third surface area includes the first and second surface areas.

8. The smart card according to any of the preceding items, wherein the first and second surface areas do not overlap one another.

9. The smart card according to any of the preceding items, wherein the second coil is configured as a passive, non-radiating component of an LC network for matching the third coil with an external reader antenna.

10. The smart card according to item 9, comprising a microchip and a capacitive element, wherein the second coil and the capacitive element form the LC network, and wherein the IC module coil is connected to the microchip.

11. The smart card according to item 10, wherein an IC module comprises the IC module coil, the microchip, a module substrate and electrodes,

- wherein the module substrate is cladded with a copper foil, and

- wherein the electrodes and the IC module coil are formed on different surfaces of the substrate module by etching the copper cladded module substrate, and

- wherein the microchip is connected to the IC module coil by wire bonding, and the substrate module comprises through holes filled with conductive material which serve as a connection between the microchip and the electrodes.

The third itemized list refers to the aspect relating of the first and third coils formed from a single piece of wire. The items of the third itemized list can be combined with one or more items of all other itemized lists in this document as well as with one or more features of the claims.

Third itemized list:

1. A smart card comprising:

- a first coil having turns of wire defining a perimeter of a first surface area of the smart card and defining a first interior space within the first surface area surrounded by turns of wire of the first coil;

- a third coil having turns of wire defining a perimeter of a third surface area of the smart card and defining a third interior space within the third surface area surrounded by turns of wire of the third coil, the first and third coils made from a single piece of wire, and the single piece of wire having a winding direction that is the same for both the first and third coils.

2. The smart card according to item 1, comprising a second coil having turns of wire defining a perimeter of a second surface area of the smart card and defining a second interior space within the second surface area surrounded by turns of wire of the second coil.

3. The smart card according to item 2, wherein the second coil is arranged within the third interior space.

4. The smart card according to item 2 or 3, wherein the second coil is separate from the first coil.

5. The smart card according to any of the preceding items 2 - 4, wherein the second coil is separate from the third coil, the third coil being larger in diameter than the first and second coils.

6. The smart card according to any of the preceding items 2 - 5, wherein the third surface area is larger than the first and second surface areas.

7. The smart card according to any of the preceding items 2 - 6, wherein the third surface area includes the first and second surface areas.

8. The smart card according to any of the preceding items 2 - 7, wherein the first and second surface areas do not overlap one another.

9. The smart card according to any of the preceding items 2 - 8, wherein the smart card comprises a plurality of layers, and wherein the first coil, the second coil and the third coil are formed on a same layer of the smart card.

10. The smart card according to any of the preceding items 2 - 9, comprising a microchip, an IC module coil and a capacitive element,

- wherein the second coil and the capacitive element form a LC-network, and

- wherein the third coil is connected to the first coil and to the second coil, and

- wherein the IC module coil is connected to the microchip, and

- wherein the first coil is arranged with respect to the IC module coil such that a magnetic field generated by the first coil can induce a current in the IC module coil.

11. A method for manufacturing a smart card, the method comprising:

- Forming a first coil having turns of wire defining a perimeter of a first surface area of the smart card and defining a first interior space within the first surface area surrounded by turns of wire of the first coil;

- Forming a third coil having turns of wire defining a perimeter of a third surface area of the smart card and defining a third interior space within the third surface area surrounded by turns of wire of the third coil, wherein the first and third coils are made from a single piece of wire, and the single piece of wire has a winding direction that is the same for both the first and third coils.

12. The method according to item 11, further comprising forming a second coil having turns of wire defining a perimeter of a second surface area of the smart card and defining a second interior space within the second surface area surrounded by turns of wire of the second coil, wherein the second coil is also made from the same single piece of wire.

13. The method according to item 12, wherein the second coil is formed within the third interior space defined by the third coil.

14. The method according to item 12 or item 13, further comprising embedding the first coil, the second coil, and the third coil on the same layer within the smart card.

The fourth itemized list refers to the aspect relating of the second and third coils formed from a single piece of wire. The items of the fourth itemized list can be combined with one or more items of all other itemized lists in this document as well as with one or more features of the claims.

Fourth itemized list:

1. A smart card comprising:

- a second coil having turns of wire defining a perimeter of a second surface area of the smart card and defining a second interior space within the second surface area surrounded by turns of wire of the second coil, and

- a third coil having turns of wire defining a perimeter of a third surface area of the smart card and defining a third interior space within the third surface area surrounded by turns of wire of the third coil, the second and third coils made from a single piece of wire, and the single piece of wire having a winding direction that is the same for both the second and third coils, and

- wherein the second coil is configured as a passive, non-radiating component of an LC network for matching the third coil with an external reader antenna.

2. The smart card according to item 1, further comprising a first coil having turns of wire defining a perimeter of a first surface area of the smart card and defining a first interior space within the first surface area surrounded by turns of wire of the first coil.

3. The smart card according to item 1 or 2, wherein the second coil is arranged within the third interior space.

4. The smart card according to item 2, wherein the second coil is separate from the first coil.

5. The smart card according to item 2 or item 4, wherein the second coil is separate from the third coil, the third coil being larger in diameter than the first and second coils.

6. The smart card according to item 2 or items 4 - 5, wherein the third surface area is larger than the first and second surface areas.

7. The smart card according to item 2 or items 4 - 6, wherein the third surface area includes the first and second surface areas.

8. The smart card according to item 2 or items 4 - 7, wherein the first and second surface areas do not overlap one another.

9. The smart card according to item 2 or items 4 - 8, wherein the smart card comprises a plurality of layers, and wherein the first coil, the second coil and the third coil are formed on a same layer of the smart card.

10. The smart card according to item 2 or items 4 - 9, comprising a microchip, a IC module coil and a capacitive element,

- wherein the second coil and the capacitive element form a LC-network, and

- wherein the third coil is connected to the first coil and to the second coil, and

- wherein the IC module coil is connected to the microchip, and

- wherein the first coil is arranged with respect to the IC module coil such that a magnetic field generated by the first coil can induce a current in the IC module coil.

11. A method for manufacturing a smart card, the method comprising:

- Forming a second coil with turns of wire that define a perimeter of a second surface area of the smart card and a second interior space within the second surface area,

- Forming a third coil with turns of wire that define a perimeter of a third surface area of the smart card and a third interior space within the third surface area, and

- wherein the second and third coils are made from a single piece of wire, and the single piece of wire maintains the same winding direction for both coils, and

- wherein the second coil is configured as a passive, non-radiating component of an LC network for matching the third coil with an external reader antenna.

12. The method according to item 11, further comprising forming a first coil with turns of wire that define a perimeter of a first surface area of the smart card and a first interior space within the first surface area.

13. The method according to item 11 or item 12, wherein the second coil is formed within the third interior space defined by the third coil.

14. The method according to item 12 or item 13, further comprising embedding the first coil, the second coil, and the third coil on the same layer within the smart card.

The fifth itemized list refers to the aspect relating of the first, second, and third coils having the same winding direction formed from a single piece of wire. The items of the fifth itemized list can be combined with one or more items of all other itemized lists in this document as well as with one or more features of the claims.
Fifth itemized list:

1. A smart card comprising:

- a first coil having turns of wire defining a perimeter of a first surface area of the smart card and defining a first interior space within the first surface area surrounded by turns of wire of the first coil, and

- a second coil having turns of wire defining a perimeter of a second surface area of the smart card and defining a second interior space within the second surface area surrounded by turns of wire of the second coil, and

- a third coil having turns of wire defining a perimeter of a third surface area of the smart card and defining a third interior space within the third surface area surrounded by turns of wire of the third coil, the first, second, and third coils made from a single piece of wire, and the single piece of wire having a winding direction that is the same for all three of coils.

2. The smart card according to item 1, wherein the second coil is arranged within the third interior space.

3. The smart card according to item 1 or item 2, wherein the second coil is separate from the first coil.

4. The smart card according to any of the preceding items, wherein the second coil is separate from the third coil, the third coil being larger in diameter than the first and second coils.

5. The smart card according to any of the preceding items, wherein the third surface area is larger than the first and second surface areas.

6. The smart card according to any of the preceding items, wherein the third surface area includes the first and second surface areas.

7. The smart card according to any of the preceding items, wherein the first and second surface areas do not overlap one another.

9. The smart card according to any of the preceding items, wherein the smart card comprises a plurality of layers, and wherein the first coil, the second coil and the third coil are formed on a same layer of the smart card.

10. The smart card according to any of the preceding items, comprising a microchip, an IC module coil and a capacitive element,

- wherein the second coil and the capacitive element form a LC-network, and

- wherein the third coil is connected to the first coil and to the second coil, and

- wherein the IC module coil is connected to the microchip, and

- wherein the first coil is arranged with respect to the IC module coil such that a magnetic field generated by the first coil can induce a current in the IC module coil.

11. A method for manufacturing a smart card, comprising the steps of:

- Forming a first coil with turns of wire that define a perimeter of a first surface area of the smart card and a first interior space within the first surface area, and

- Forming a second coil with turns of wire that define a perimeter of a second surface area of the smart card and a second interior space within the second surface area, and

- Forming a third coil with turns of wire that define a perimeter of a third surface area of the smart card and a third interior space within the third surface area, and

- Using a single piece of wire to form the first, second, and third coils, and maintaining the same winding direction for all three coils.

The sixth itemized list refers to the aspect relating of the first, second, and third coils formed from a single piece of wire including no welds or soldering joints. The items of the sixth itemized list can be combined with one or more items of all other itemized lists in this document as well as with one or more features of the claims.

Sixth itemized list:

1. A smart card comprising:

- a first coil having turns of wire defining a perimeter of a first surface area of the smart card and defining a first interior space within the first surface area surrounded by turns of wire of the first coil, and

- a second coil having turns of wire defining a perimeter of a second surface area of the smart card and defining a second interior space within the second surface area surrounded by turns of wire of the second coil, and

- a third coil having turns of wire defining a perimeter of a third surface area of the smart card and defining a third interior space within the third surface area surrounded by turns of wire of the third coil, the first, second, and third coils made from a single piece of wire, and the single piece of wire including no welds or soldering joints for connecting portions of the single piece of wire.

2. The smart card according to item 1, wherein the second coil is arranged within the third interior space.

3. The smart card according to item 1 or item 2, wherein the second coil is separate from the first coil.

4. The smart card according to any of the items 1 - 3, wherein the second coil is separate from the third coil, the third coil being larger in diameter than the first and second coils.

5. The smart card according to any of the items 1 - 4, wherein the third surface area is larger than the first and second surface areas.

6. The smart card according to any of the items 1 - 5, wherein the third surface area includes the first and second surface areas.

7. The smart card according to any of the items 1 - 6, wherein the first and second surface areas do not overlap one another.

8. The smart card according to any of the preceding items, wherein the smart card comprises a plurality of layers, and wherein the first coil, the second coil and the third coil are formed on a same layer of the smart card.

9. The smart card according to any of the preceding items, comprising a microchip, an IC module coil and a capacitive element,

- wherein the second coil and the capacitive element form a LC-network, and

- wherein the third coil is connected to the first coil and to the second coil, and

- wherein the IC module coil is connected to the microchip, and

- wherein the first coil is arranged with respect to the IC module coil such that a magnetic field generated by the first coil can induce a current in the IC module coil.

10. A method for manufacturing a smart card, comprising the steps of:

- Providing a single piece of wire, wherein the single piece of wire includes no welds or soldering joints,

- Forming a first coil by winding the single piece of wire to define a perimeter of a first surface area of the smart card, and creating a first interior space within the first surface area surrounded by turns of wire of the first coil,

- Forming a second coil by continuing to wind the single piece of wire to define a perimeter of a second surface area of the smart card, and creating a second interior space within the second surface area surrounded by turns of wire of the second coil,

- Forming a third coil by further winding the single piece of wire to define a perimeter of a third surface area of the smart card, and creating a third interior space within the third surface area surrounded by turns of wire of the third coil.

The seventh itemized list refers to the aspect relating of the capacitive element. The items of the seventh itemized list can be combined with one or more items of all other itemized lists in this document as well as with one or more features of the claims.
Seventh itemized list:

1. A smart card comprising:

- a first coil having turns of wire defining a perimeter of a first surface area of the smart card and defining a first interior space within the first surface area surrounded by turns of wire of the first coil, and

- a second coil having turns of wire defining a perimeter of a second surface area of the smart card and defining a second interior space within the second surface area surrounded by turns of wire of the second coil, and

- a third coil having turns of wire defining a perimeter of a third surface area of the smart card and defining a third interior space within the third surface area surrounded by turns of wire of the third coil, and

- a capacitive element comprising the second coil and/or a pair of conductors arranged at an end of the second coil.

2. The smart card according to item 1, wherein the second coil is arranged within the third interior space.

3. The smart card according to item 1 or item 2, wherein the second coil is separate from the first coil, the first coil configured to couple to an IC module coil.

4. The smart card according to any of the preceding items, wherein the second coil is separate from the third coil, the third coil being larger in diameter than the first and second coils.

5. The smart card according to any of the preceding items, wherein the third surface area is larger than the first and second surface areas.

6. The smart card according to any of the preceding items, wherein the third surface area includes the first and second surface areas.

7. The smart card according to any of the preceding items, wherein the first and second surface areas do not overlap one another.

8. The smart card according to any of the preceding items, wherein the smart card is free from a capacitor component having electrodes associated therewith.

10. The smart card according to any of the preceding items, comprising a microchip and an IC module coil,

- wherein the second coil and the capacitive element form a LC-network, and

- wherein the third coil is connected to the first coil and to the second coil, and

- wherein the IC module coil is connected to the microchip, and

- wherein the first coil is arranged with respect to the IC module coil such that a magnetic field generated by the first coil can induce a current in the IC module coil.

The eighth itemized list refers to the aspect relating of the first, second, and third coil are arranged on the same plane. The items of the eighth itemized list can be combined with one or more items of all other itemized lists in this document as well as with one or more features of the claims.

Eighth itemized list:

1. A smart card comprising:

- a first coil having turns of wire defining a perimeter of a first surface area of the smart card and defining a first interior space within the first surface area surrounded by turns of wire of the first coil, and

- a second coil having turns of wire defining a perimeter of a second surface area of the smart card and defining a second interior space within the second surface area surrounded by turns of wire of the second coil, and

- a third coil having turns of wire defining a perimeter of a third surface area of the smart card and defining a third interior space within the third surface area surrounded by turns of wire of the third coil, and

- an antenna substrate, the antenna substrate having a first plane in which the first, second, and third coils are arranged.

2. The smart card according to item 1, wherein turns of the first, second, and third coils are co-planar with one another.

3. The smart card according to item 1 or item 2, further comprising a capacitive element, wherein the capacitive element is connected to the second coil forming a LC-network, and wherein the capacitive element is arranged on the same plane as the first, second, and third coil.

4. The smart card according to any of the preceding items, further comprising an IC module coil connected to a microchip, wherein the IC module coil is arranged on a second plane.

5. The smart card according to any of the preceding items, comprising an IC module having a module substrate with a second plane.

6. The smart card according to item 5 comprising a card substrate with an engagement hole accommodating the IC module.

7. The smart card according to any of the preceding items 4 - 6, wherein the second plane is parallel to the first plane.

8. The smart card according to any of the preceding items 4 - 7, wherein the IC module coil and the first coil at least partially overlap.

9. The smart card according to any of the preceding items 4 - 8, wherein the center of the IC module coil and the first coil are superimposed.

10. The smart card according to any of the preceding items, wherein the first, second, and third coils are arranged in the first plane such that all three antenna structures comprising the first, second, and third coils are formed on the first plane with only short distances where wire crosses over another wire or where wire bridges from the first, second, or third interior space to an outer diameter of the first, second, or third coil.

11. The smart card according to any of the preceding items, wherein the second coil is arranged within the third interior space.

12. The smart card according to any of the preceding items, wherein the second coil is separate from the first coil.

13. The smart card according to any of the preceding items, wherein the second coil is separate from the third coil, the third coil being larger in diameter than the first and second coils.

14. The smart card according to any of the preceding items, wherein the third surface area is larger than the first and second surface areas.

15. The smart card according to any of the preceding items, wherein the third surface area includes the first and second surface areas.

16. The smart card according to any of the preceding items, wherein the first and second surface areas do not overlap one another.

17. The smart card according to any of the preceding items, wherein the antenna substrate is arranged between two compensation layers forming an inlay.

18. The smart card according to any of the preceding items, comprising a card substrate,

- wherein the card substrate can be formed as a printed layer, a PVC layer or an overlay layer, and
- wherein the card substrate can also be a combination of a printed layer, PVC layer and/or an overlay layer.

19. The smart card according to item 18, wherein the antenna substrate bonded to at least one card substrate by means of lamination, using heat and pressure.

20. The smart card according to any of the preceding items, wherein the antenna substrate comprises a PVC or PC or PET or PETG substrate.

The nineth itemized list refers to the aspect relating of the modified properties of the second coil. The items of the nineth itemized list can be combined with one or more items of all other itemized lists in this document as well as with one or more features of the claims.

Nineth itemized list:

1. A smart card comprising:

- a first coil having turns of wire defining a perimeter of a first surface area of the smart card and defining a first interior space within the first surface area surrounded by turns of wire of the first coil, and

- a second coil having turns of wire defining a perimeter of a second surface area of the smart card and defining a second interior space within the second surface area surrounded by turns of wire of the second coil, and

- a third coil having turns of wire defining a perimeter of a third surface area of the smart card and defining a third interior space within the third surface area surrounded by turns of wire of the third coil,

- the second coil arranged to include additional turns of wire and/or configured to use wire of greater width so as to increase a surface area occupied by the second coil turns of wire, or

- the second coil arranged to include additional turns of wire and/or configured to use heavier materials so as to increase a weight of the smart card, or

- the second coil arranged to include additional turns of wire and/or configured to use materials with visually distinguishable color so as to increase a visibility of the smart card.

2. The smart card according to item 1, wherein the second coil is arranged within the third interior space.

3. The smart card according to item 1 or item 2, wherein the second coil is separate from the first coil, the first coil configured to couple to an IC module coil.

4. The smart card according to any of the preceding items, wherein the second coil is separate from the third coil, the third coil being larger in diameter than the first and second coils.

5. The smart according to any of the preceding items, wherein the third surface area is larger than the first and second surface areas.

6. The smart card according to any of the preceding items, wherein the third surface area includes the first and second surface areas.

7. The smart card according to any of the preceding items, wherein the first and second surface areas do not overlap one another.

8. The smart card according to any of the preceding items, wherein the second coil comprises wire made of gold, steel, or silver.

9. The smart card according to any of the preceding items, comprising an antenna substrate with a first plane, wherein the first, the second and the third coil are arranged on the first plane, the third coil extending over 70 % and 95% of the of the total size of the first plane.

The tenth itemized list refers to the aspect relating of electrically connecting the ends of the second and third coils. The items of the tenth itemized list can be combined with one or more items of all other itemized lists in this document as well as with one or more features of the claims.

Tenth itemized list:

1. A smart card comprising:

- a first coil having turns of wire defining a perimeter of a first surface area of the smart card and defining a first interior space within the first surface area surrounded by turns of wire of the first coil, and

- a second coil having turns of wire defining a perimeter of a second surface area of the smart card and defining a second interior space within the second surface area surrounded by turns of wire of the second coil, and

- a third coil having turns of wire defining a perimeter of a third surface area of the smart card and defining a third interior space within the third surface area surrounded by turns of wire of the third coil, an end of the third coil electrically interconnected with an end of the second coil, and the second coil positioned within the third interior space and encircled by windings of the third coil.

2. The smart card according to item 1, wherein the second coil is separate from the first coil, the first coil configured to couple to an IC module coil.

3. The smart card according to item 1 or item 2, wherein the second coil is separate from the third coil, the third coil being larger in diameter than the first and second coils.

4. The smart card according to any of the preceding items, wherein the third surface area is larger than the first and second surface areas.

5. The smart card according to any of the preceding items, wherein the third surface area includes the first and second surface areas.

6. The smart card according to any of the preceding items, wherein the first and second surface areas do not overlap one another.

7. The smart card according to any of the preceding items, wherein the second coil comprises wire made of gold, steel, or silver.

8. The smart card according to any of the preceding items, wherein the first coil is electrically connected to the third coil.

The eleventh itemized list refers to the aspect relating of the configuration of three coils for a smart card. The items of the eleventh itemized list can be combined with one or more items of all other itemized lists in this document as well as with one or more features of the claims.

Eleventh itemized list:

1. A smart card comprising:

- a first coil having turns defining a perimeter of a first surface area of the smart card and defining a first interior space within the first surface area surrounded by turns of the first coil, and
- a second coil having turns defining a perimeter of a second surface area of the smart card and defining a second interior space within the second surface area surrounded by turns of the second coil, and
- a third coil having turns defining a perimeter of a third surface area of the smart card and defining a third interior space within the third surface area surrounded by turns of the third coil, the second coil arranged within the third interior space and configured as a passive, non-radiating component of an LC network for matching the third coil with an external reader antenna.

2. The smart card according to item 1, wherein the second coil is separate from the first coil, the first coil configured to couple to an IC module coil.

3. The smart card according to item 1 or 2, wherein the second coil is separate from the third coil, the third coil being larger in diameter than the first and second coils.

4. The smart card according to any of the preceding items, wherein the third surface area is larger than the first and second surface areas.

5. The smart card according to any of the preceding items, wherein the third surface area includes the first and second surface areas.

6. The smart card according to any of the preceding items, wherein the first and second surface areas do not overlap one another.

7. The smart card according to any of the preceding items, wherein the second coil is configured as a non-energy capturing and non-energy absorbing component that is not involved with signal transmission between the smart card and the external reader.

8. The smart card according to any of the preceding items, wherein the second coil is configured so as to reduce or avoid being a load to a send coil of the external reader.

9. The smart card according to any of the preceding items, comprising a microchip and a capacitive element, wherein the second coil and the capacitive element form the LC network, and wherein the IC module coil is connected to the microchip.

10. The smart card according to item 9, wherein the capacitive element and the second coil are a structural unit, wherein the capacitive element is formed by two wire ends of the second coil.

11. The smart card according to item 9 or item 10, wherein the microchip is mounted on an IC module.

12. The smart card according to item 11, wherein the IC module comprises a module substrate having terminal electrodes serving as a contact-type transmission section, and wherein the IC module comprises the IC module coil which serves as a non-contact-type transmission section.

13. The smart card according to item 12, wherein the terminal electrodes and the IC module coil are formed on different surfaces by etching the double-sided cladded module substrate.

14. The smart card according to item 12 or item 13, wherein the microchip is connected to the terminal electrodes of the module substrate via through-holes that are filled with a conductive material.

15. The smart card according to any of the preceding items, wherein the first coil, the second coil and the third coil are connected in parallel to each other.

16. The smart card according to any of the preceding items, wherein the first coil, the second coil, the third coil comprise a wire having a thickness of 0.08 mm.

17. The smart card according to any of the preceding items, wherein the first coil, the second coil, the third coil are formed by winding insulation-coated conductor wires.

18. The smart card according to any of the preceding items, wherein the first coil, the second coil and the third coil have different pitches.

19. A system comprising a smart card according to any of the preceding items and an external reader, wherein the external reader is configured to emit a high-frequency magnetic field which can induce a current in the third coil.

20. A method for communication between a smart card according to any of the preceding items and an external reader with a transceiver coil, comprising the following method steps:

- emitting a high-frequency magnetic field from the transceiver coil, and
- providing the smart card in the high-frequency magnetic field so that a current is induced in the third coil.

## REFERENCE NUMERAL LIST

| | |
|---|---|
| 1 | smart card |
| 2 | IC module |
| 3 | first coil |
| 4 | third coil |
| 5 | antenna substrate |
| 6 | microchip |
| 8 | IC module coil |
| 9 | module substrate |
| 10 | card substrates |
| 11 | engagement holes |
| 12 | second coil |
| 13 | dam-and-fill encapsulation material |
| 15 | capacitive element |
| 20 | alternative engagement holes |
| 21 | gold plating |
| 22 | Ni plating |
| 23 | copper foil |
| 24 | adhesive layer |
| 25 | electrodes |
| 26 | through-holes |
| 27 | wire bonding |
| 30 | overlay layer |
| 31 | PVC layer |
| 32 | printed layer |
| 34 | antenna sheet |
| 35 | compensation layer |
| 1000 | method for forming a smart card |
| 1002 | method step 1 |
| 1004 | method step 2 |
| 1006 | method step 3 |
| 1008 | method step 4 |
| 1010 | method step 5 |
| 1012 | method step 6 |

**Claims**

1. A smart card (1) comprising:

a first coil (3) having turns defining a perimeter of a first surface area of the smart card (1) and defining a first interior space within the first surface area surrounded by turns of the first coil (3), and
a second coil (12) having turns defining a perimeter of a second surface area of the smart card

61     **EP 4 657 310 A1**     62

(1) and defining a second interior space within the second surface area surrounded by turns of the second coil (12), and

a third coil (4) having turns defining a perimeter of a third surface area of the smart card (1) and defining a third interior space within the third surface area surrounded by turns of the third coil (4), and

a non-metallic substrate (5, 10) of the smart card 1 into which the first, second, and third coils (3, 4, 12) are arranged, the non-metallic substrate being free from conductive or metallic foil or conductive or metallic layers.

2. The smart card (1) according to claim 1, wherein the first, second, and third coils (3, 4, 12) are laid into the non-metallic card substrate (5, 10) without use of laser ablation or etching.

3. The smart card (1) according to any of the preceding claims, wherein the second coil (12) is configured as a passive, non-radiating component of an LC network for matching the third coil (4) with an external reader antenna.

4. The smart card (1) according to claim 3, comprising a microchip (6) and a capacitive element (15), wherein the second coil (12) and the capacitive element (15) form the LC network, and wherein an IC module coil (8) is connected to the microchip (6).

5. The smart card (1) according to any of the preceding claims, wherein the second coil (12) is arranged within the third interior space.

6. The smart card (1) according to any of the preceding claims, wherein the second coil (12) is separate from the third coil (4), the third coil (4) being larger in diameter than the first and second coils (3, 12).

7. The smart card (1) according to any of the preceding claims, wherein the third surface area includes the first and second surface areas and the first and second surface areas do not overlap one another.

8. A method (1000) for wire embedding for a smart card (1), the method comprising:

- embedding wires of a first coil (3) and a third coil (4) onto an antenna substrate (5) of the smart card (1) using a constant downward force, wherein the first coil (3) has turns of wire defining a first interior space within a first surface area and the third coil has turns of wire defining a third interior space within a third surface area.

9. The method (1000) according to claim 8, further comprising, embedding a wire of a second coil (12) to the antenna substrate (5) using constant downward force, wherein the second coil (12) has turns defining a second interior space within a second surface area.

10. The method (1000) according to claim 9, wherein embedding the first, second, and third coils (3, 4, 12) comprises applying ultrasonic vibration along with the constant downward force.

11. The method (1000) according to claim 9, wherein the second coil (12) is arranged within the third interior space, wherein the third coil (4) is larger in diameter than the first and second coils (3, 12).

12. The method (1000) according to any of the preceding claims 8- 11, further comprising laminating the antenna substrate (5) with a plurality of card substrates (10) to form a mono-block substrate, wherein laminating does not include use of adhesives.

13. The method (1000) according to any of the preceding claims 8 - 12, wherein the first coil (3) is a coupler coil, the third coil (4) is an antenna coil, and the second coil (12) is a passive component.

14. The method (1000) according to any of the preceding claims 8 - 13, wherein the antenna substrate (5) is provided in a sheet (34) divided into a plurality of sections, wherein each of the plurality of sections is intended for a corresponding smart card (1).

15. The method (1000) according to any of the preceding claims 8 - 14, further comprising embedding wire of a capacitive element (15) to the antenna substrate (5) using constant downward force.

32

**Fig. 1**

**Fig. 2**

**Fig. 3**

1234 5678 9012 3456
2022        12/27
CARDHOLDER NAME

**Fig. 4**

**Fig. 5**

**Fig. 6**

A - A

**Fig. 7**

**Fig. 8**

## A - A

card substrate

inlay

card substrate

**Fig. 9**

**Fig. 10**

```
                        ┌──────────┐
                        │  START   │
                        └──────────┘
                             │
                             ▼                        1002
              ┌───────────────────────────────┐
              │ Embed wires of first coils and │
              │ third coils onto antenna       │
              │ substrate                      │
              └───────────────────────────────┘
                             │
                             ▼                        1004
              ┌───────────────────────────────┐
              │ Embed wires of second coils    │
              │ onto antenna substrate         │
              └───────────────────────────────┘
                             │
                             ▼                        1006
              ┌───────────────────────────────┐
              │ Embed capacitive elements onto │
              │ antenna substrate              │
              └───────────────────────────────┘
                             │
                             ▼                        1008
              ┌───────────────────────────────┐
              │ Laminate antenna substrate     │
              │ with card substrates to form   │
              │ mono-block substrate           │
              └───────────────────────────────┘
                             │
                             ▼                        1010
              ┌───────────────────────────────┐
              │ Divide mono-block substrate    │
              │ into plurality of smart cards  │
              └───────────────────────────────┘
                             │
                             ▼                        1012
              ┌───────────────────────────────┐
              │ Form engagement hole for IC    │
              │ module in each of the          │
              │ plurality of smart cards       │
              └───────────────────────────────┘
                             │
                             ▼
                        ┌──────────┐
                        │   END    │
                        └──────────┘
```

1000

Europäisches
Patentamt

European
Patent Office

Office européen
des brevets

# EUROPEAN SEARCH REPORT

**Application Number**

EP 24 17 9158

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2015/154491 A1 (CHARRAT BRUNO [FR] ET AL) 4 June 2015 (2015-06-04) * paragraphs [0004], [0018], [0050], [0053], [0054]; figures 2-4,12,13 * | 1-15 | INV.<br>G06K19/077<br>H01Q1/22<br>H01Q7/00<br>H04B5/26 |
| X | US 2007/267506 A1 (BASHAN ODED [IL] ET AL) 22 November 2007 (2007-11-22) * paragraphs [0002], [0019], [0020]; figure 3c * | 1-15 | |
| X | US 6 378 774 B1 (EMORI SUSUMU [JP] ET AL) 30 April 2002 (2002-04-30) * figure 3A * | 1-15 | |
| X | US 2014/104133 A1 (FINN DAVID [IE] ET AL) 17 April 2014 (2014-04-17) * paragraphs [0141], [0437]; figures 1D, 1H-1M and 14A * | 1-15 | |

| | | | TECHNICAL FIELDS SEARCHED (IPC) |
|---|---|---|---|
| | | | G06K<br>H04B<br>H01Q |

The present search report has been drawn up for all claims

| Place of search | Date of completion of the search | Examiner |
|---|---|---|
| Munich | 6 November 2024 | Heusler, Nikolaus |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons
....................................................................................
& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 24 17 9158

This annex lists the patent family members relating to the patent documents cited in the above-mentioned European search report.
The members are as contained in the European Patent Office EDP file on
The European Patent Office is in no way liable for these particulars which are merely given for the purpose of information.

06-11-2024

| Patent document cited in search report | | Publication date | Patent family member(s) | | Publication date |
|---|---|---|---|---|---|
| US 2015154491 | A1 | 04-06-2015 | BR | 112014033059 A2 | 27-06-2017 |
| | | | CN | 104603799 A | 06-05-2015 |
| | | | EP | 2867832 A1 | 06-05-2015 |
| | | | FR | 2992760 A1 | 03-01-2014 |
| | | | US | 2015154491 A1 | 04-06-2015 |
| | | | WO | 2014006300 A1 | 09-01-2014 |
| US 2007267506 | A1 | 22-11-2007 | EP | 2019997 A1 | 04-02-2009 |
| | | | US | 2007267506 A1 | 22-11-2007 |
| | | | WO | 2007135658 A1 | 29-11-2007 |
| | | | ZA | 200700427 B | 27-05-2009 |
| US 6378774 | B1 | 30-04-2002 | CN | 1278936 A | 03-01-2001 |
| | | | DE | 69831592 T2 | 22-06-2006 |
| | | | EP | 1031939 A1 | 30-08-2000 |
| | | | US | 6378774 B1 | 30-04-2002 |
| | | | WO | 9926195 A1 | 27-05-1999 |
| US 2014104133 | A1 | 17-04-2014 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20130075477 A1